# EUROPEAN PATENT SPECIFICATION

(11) **EP 3 238 439 B1**
(45) Date of publication and mention of the grant of the patent: **28.11.2018**
(21) Application number: 15828837.3
(22) Date of filing: 24.12.2015
(51) Int. Cl.: B66C 1/66, E05D 15/44, E05F 1/10, G09F 27/00, H04N 5/64

(54) **METHODS OF MANUFACTURING LARGE-SCALE ELECTRONIC DISPLAYS**
VERFAHREN ZUR HERSTELLUNG VON GROSSFLÄCHIGEN ELEKTRONISCHEN ANZEIGEN
PROCÉDÉS DE FABRICATION D'AFFICHEURS ÉLECTRONIQUES À GRANDE ÉCHELLE

(30) Priority: 24.12.2014 GB 201423233
(43) Date of publication of application: 01.11.2017
(73) Proprietor: Amscreen Group Limited, Horwich Bolton Lancashire BL6 6HG (GB)
(72) Inventor: WHITEHEAD, Stephen, Bolton, Lancashire BL6 6HG (GB); SHIRES, Jonathan, Bolton, Lancashire BL6 6HG (GB); GREENWOOD, Gary, Bolton, Lancashire BL6 6HG (GB)
(74) Representative: Stanley, David William
(86) International application number: PCT/GB2015/054167
(87) International publication number: WO 2016/102980

(56) References cited:
- WO-A2-2007/150039
- JP-A- 2001 282 127
- KR-Y1- 200 465 321
- US-A1- 2014 360 552

## Description

The present invention relates to large-scale electronic displays and methods of manufacturing the same. In the context of this specification, "large-scale" means a minimum visible screen size of approximately 50 inches (127 cm), measured diagonally across the screen.

Electronic advertising displays are being used increasingly at the present time. They are now being used in outdoor as well as indoor venues; in locations such as traditional roadside and city centre billboard locations, travel environments (e.g. rail platforms, airports, bus stops, trams, underground rail), retail environments (e.g. shopping malls, supermarkets, petrol stations), entertainment venues (e.g. stadiums, arenas, cinemas, restaurants, bars) and typically any location where advertisers can reach large audiences as they go about their day to day business.

Such displays typically use LCD or LED technology and are designed to cater for outdoor environmental conditionals such a weather, temperature, water, wind loading etc and designed to withstand robust environments e.g. vandalism and accidental impacts e.g. from vehicles, shopping trolleys, people, etc.

Such displays are typically large - e.g. high brightness 70 inches (178 cm) or more visible screens that can be viewed by a mass audience from a distance and require varied fixing mechanisms to suite the varied application needs - e.g. ground fixed (with suitable foundations), wall mounted, integrated with structures e.g. bus-stops - and often with some creative or branded design to suit the marketing needs of brand, retailer or display owner.

As a result, screens are often extremely heavy, bulky, expensive and difficult to store, transport and install - especially where there are obstacles on-site (e.g. kerbs, pavements, retail canopies, bollards, bins, bus-stops, etc) that need to be navigated or avoided. This generally leads to low volume rollouts, which are difficult to scale up to high volume.

Conventionally, large advertising screens are often manufactured to suit a specific project, often generated as a result of a tender process from a retailer or council, detailing specific requirements. As a result, screens will be designed/created in a bespoke way, to meet the client's needs, often taking time to build from scratch or through a systems integration process using available building blocks; based on modifications to an existing design in order to reduce the design process; or by some level of modular development, in order to help tailor mass produced display housings to client needs e.g. video module, power supply module or display cassette fitted to mass produced housings.

A large advertising screen project is often considered complete when the screen network has been installed and where separate maintenance contracts are established by screen suppliers, who charge for ongoing maintenance. As a result, screens are often not designed with ongoing maintenance in mind, particularly with the time pressures to meet tender deadlines, and where the maintenance contracts are valuable to the supplier, who often charge for callouts and repairs etc.

Electronic displays are often created by system integrating mass produced components from different suppliers, which are often over-engineered, expensive and have no consideration for on-going maintenance once delivered. Typical components and sub-assemblies include display housings, enclosures, glass assemblies, LCD panels, backlit LCD panels, PC boards, media players, power supplies, cooling systems, communication devices, routers, etc.

Known methods for manufacturing large-scale electronic displays are described by the patent documents JP 2001 282127 and WO 2007/150039.

These types of designs make no or little provision for swapping out components / sub-assemblies onsite e.g. fans, fan assemblies, LCD panels, PC-boards etc.; where any failures require the entire display to be swapped out. In many cases there is no provision to access serviceable assemblies within the screen, particularly as screens get positioned close to buildings and structures where there is little or no access from the rear of the screen; where there are long and complex cable runs from the base control electronics to the LCD units. Typical implementations include (as separate assemblies or integrated in some form) foundations or levelled base to provide a level / solid surface to mount the screen; base unit containing critical control electronics e.g. PC, video control boards, power supplies, communications etc., LCD unit containing LCD panel, backlights, heat sinks, cooling fan arrangements, cladding for side, top front etc.

Clearly this type of arrangement does not lend itself to "Wall mount" due to the need for an unsightly "control box" below the screen that prevents the creative appearance of a "wall poster" being possible.

Although some large advertising screens have a level of modularity, they are often "over designed" to cater for worst conditions of "one size fits all", carrying excess cost and weight for many other applications. As an example, fully integrated "LCD cassettes" have been used with mass produced housings, containing the LCD panel, cooling assemblies, control electronics (PC, Video etc), communication component, protective front glass etc. This is installed into the aperture of a mass produced housing that aligns with air flow provision, feeds power (e.g. via base), and the rear of the mass produced housing provides alternate advertising medium such as static or dynamic (scrolling posters).

The mass housing is often installed on site first, and then the "LCD Cassette" fitted at a different time, using contractors of different skill sets, including the need for a qualified electrician to connect power through to the LCD Cassette, resulting in multiple sites visits and additional installation costs.

Specialised and expensive lifting equipment is required to lift the cassette into the housing using a "suction means" due to the weight of the cassette.

Access to the control electronics within the cassette is via the rear of the unit; such that if the display is against a wall or other structure (i.e. no rear poster unit), then a mechanism is required to move the housing so that the rear is accessible e.g. housing mounted on a "Single Leg" that allows the screen to pivot/rotate to gain rear access. Any rear static/dynamic poster has to be opened and key related components associate with it removed (e.g. poster back lights) in order to gain access to the rear panel of the "LCD Cassette". This approach leads to a more complex, time consuming and expensive maintenance and installation processes.

The front glass of the LCD Cassette is heavily secured, required many bolts to be undone if there is a requirement to change the glass on-site e.g. vandalism. Again, this is made difficult due to the weight of the assembly and need for specialised suction equipment.

As will be appreciated, the design of a "Back-to-back" digital display based on this approach is not practical due to the requirement for rear access to each LCD Cassette, requiring additional supports and rotational mechanism to gain access. Another factor is the resultant depth of the screen.

One common mass produced housing may not easily meet varied mounting needs (free standing, wall mount, integrated structure etc) without over engineering to have a one-size fits all; however this approach leads to additional weight, cost and complexity.

An issue with known solutions is that current solutions are not scalable for large scale rollouts where time, cost and quality are critical. Furthermore, the limited modular nature does not lend itself to a common design philosophy where the modules are insufficiently flexible for easily re-targeting for new customer and application needs. For example, varied structural support needs to cater different structures e.g. bus-stops with downward loading (e.g. snow on top of shelter), other structures or winding loading conditions that generate side twisting forces e.g. shopping malls (no wind), free standing, wall mount, free standing at road side on an open hill where wind loading and structural supports needs vary greatly.

The result of this is that new products are still often required to cater for customer and application needs, thus reducing the ability to mass produce common components in volume, decrease costs and reduce implementation timescales.

Multiple handling and moving of large assemblies and units leads to increased QA issues

As the benefits of digital screens become understood by councils, retailers, brands, transportation companies etc (e.g. high impact, time of day advertising, real time control, fast response, localising of global content etc); there is a growing need to reduce overall cost of ownership of electronic displays.

Furthermore, there is a need to build a greater level of maintenance support into the product itself, such that maintenance services can be wrapped up with product manufacturing costs to enable new business models to be adopted e.g. a pure rental model where the end customer is not liable for maintenance costs.

Preferred embodiments of the present invention aim to provide improved large-scale electronic displays and methods of manufacturing such displays.

According to one aspect of the present invention, there is provided a method of manufacturing a large-scale electronic display according to claim 1.

Further embodiments are defined by claims 2-16.

For a better understanding of the invention, and to show how embodiments of the same may be carried into effect, reference will now be made, by way of example, to the accompanying diagrammatic drawings, in which:
Figure 1A is a rear view of a fully assembled digital advertising display (with optional plinth) and static/scrolling rear advertising panel;
Figure 1B is a front view of the display;
Figure 1C is a rear view of the display with an alternative rear digital advertising display;
Figure 2 is a partially exploded view of the fully assembled display with outer cladding removed;
Figure 3 is a fully exploded view of the fully assembled display, showing constituent modular parts;
Figure 4 is a view of the fully assembled display as a free-standing variation, mounted on a plinth;
Figure 5 is a view of the fully assembled display and plinth integrated with a structure e.g. bus stop shelter with inward facing screen;
Figure 6 is a view of the fully assembled display (no rear panel or plinth) mounted on a wall;
Figures 7A, 7B, 7C illustrate digital display modular implementations with differing heights, creative look and material (cladding);
Figure 8A illustrated a display with combined front and rear advertising modules;
Figure 8B shows a double-sided (back-to-back) digital advertising display constructed from two single digital displays;
Figure 9A is a front view of the internal components of a digital advertising display with a glass door and LCD panel removed;
Figure 9B is a side view of the display of Figure9A with the glass door open and an LCD panel brought forward;
Figures 10A, 10B, 10C are side views showing an opening sequence of a door opening mechanism of the display of Figures 9A and 9B, with the LCD panel unattached to the glass door, and with an LCD panel cable unplugged to allow the LCD panel to be removed;
Figures 10D and 10E are side views showing the door opening mechanism, with the LCD panel clipped to the glass door with a catch (922), and with an LCD panel cable unplugged to allow access to rear sub-assemblies for maintenance;
Figures 11A, 11B are perspective views of an unassembled (A) and an assembled (B) transport jig;
Figures 12A, 12B are perspective views of a number of transport jigs stacked and/or interlocked both with (A) and without (B) displays carried on the jigs;
Figure 13 is a view of a loaded transport jig navigating an on-site obstacle such as a kerb, with a wheel raised and pivoted onto the obstacle;
Figure 14 illustrates an end-to-end scalable process for mass low-cost deployment of large-scale electronic displays, with ease of on-site maintenance and serviceability;
Figure 15 illustrates the manufacturing process of Figure 14;
Figure 16A illustrates lifting a display with transport jig;
Figure 16B illustrates stacking displays on a lorry close to one another by interlocking and securing transport jigs;
Figure 17A illustrates digging the ground, laying foundations e.g. concrete and fixing a plinth for a display;
Figure 17B is a perspective view of completed ground works with the plinth buried - note that the plinth may alternatively protrude or be bolted to a foundation laid above ground e.g. where there is a camber in the ground.;
Figure 18 illustrates a display with transport jig being lifted from transport to the ground on-site;
Figure 19 illustrates the display of Figure 18 being pushed into location above the plinth using the transport jig;
Figure 20 illustrates the display of Figure 18 being secured to the plinth in-situ;
Figure 21 illustrates the installed display of Figure 18 integrated with a bus shelter - in this example, the digital screen (LCD panel) of the display is outward facing;
Figure 22 illustrates maintenance of the installed display of Figure 21 on-site, where front access to components is provided by opening a glass door to bring the LCD panel forward in order to access rear components and sub-assemblies for ease of on-site maintenance and swap-out;
Figures 23 to 41 illustrate an alternative design of display and transport jig;

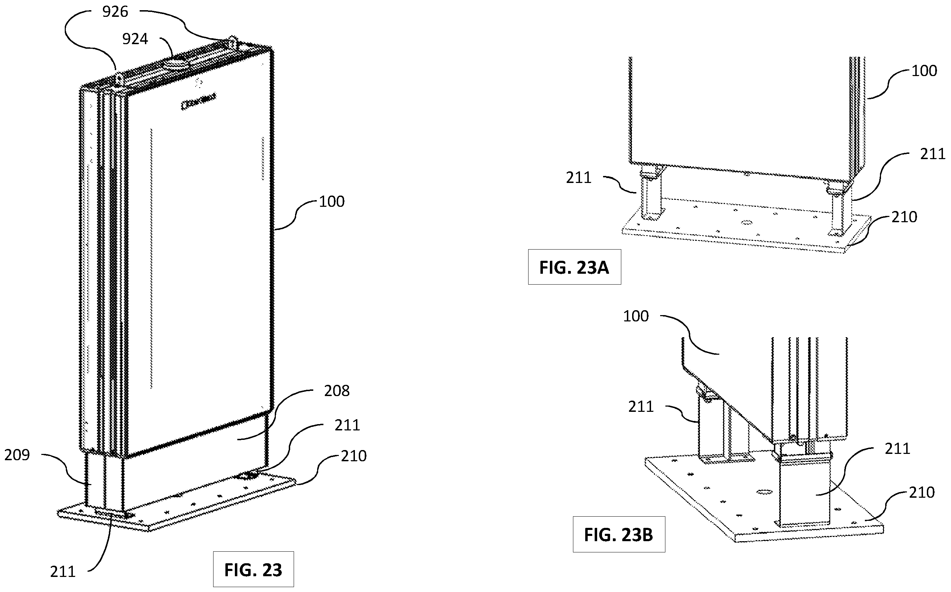

Figure 23 illustrates the alternative display in perspective view;
Figures 23A and 23B are detail views showing C-brackets connecting to a foundation plate;

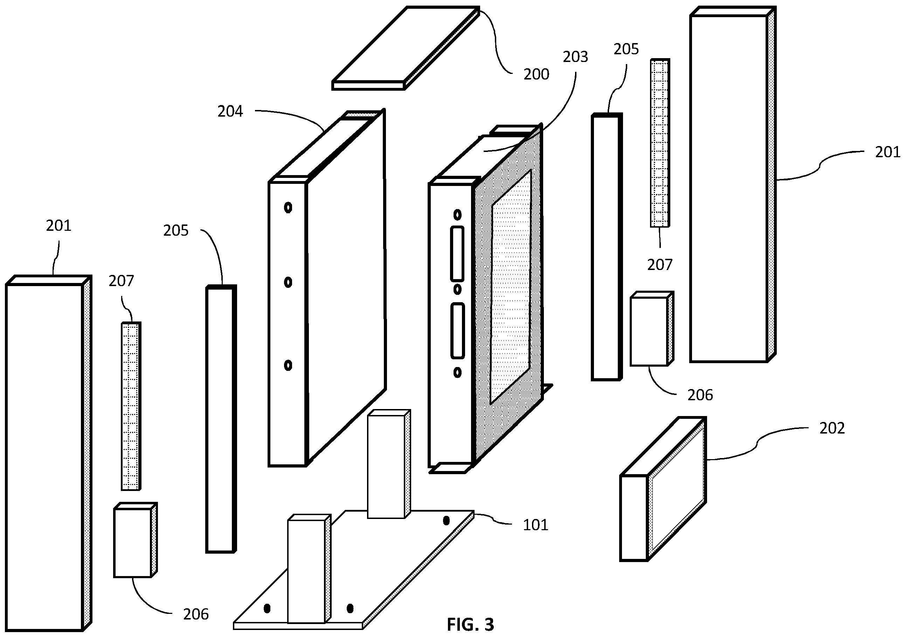

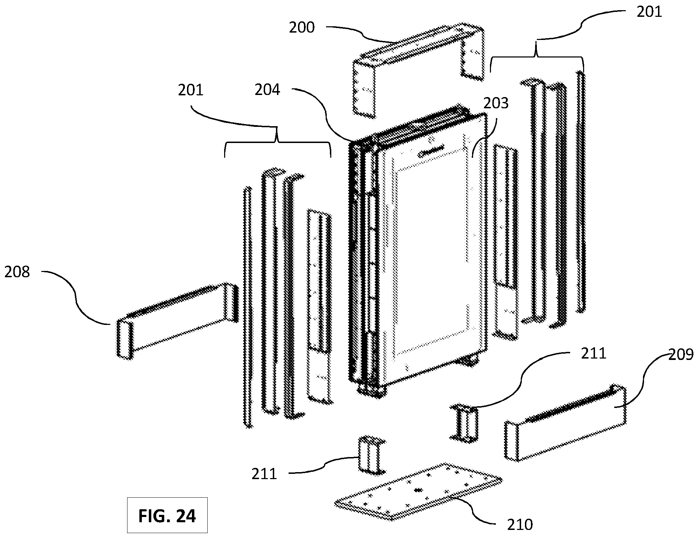

Figure 24 is a view similar to Figure 3, showing the alternative display as an exploded view;

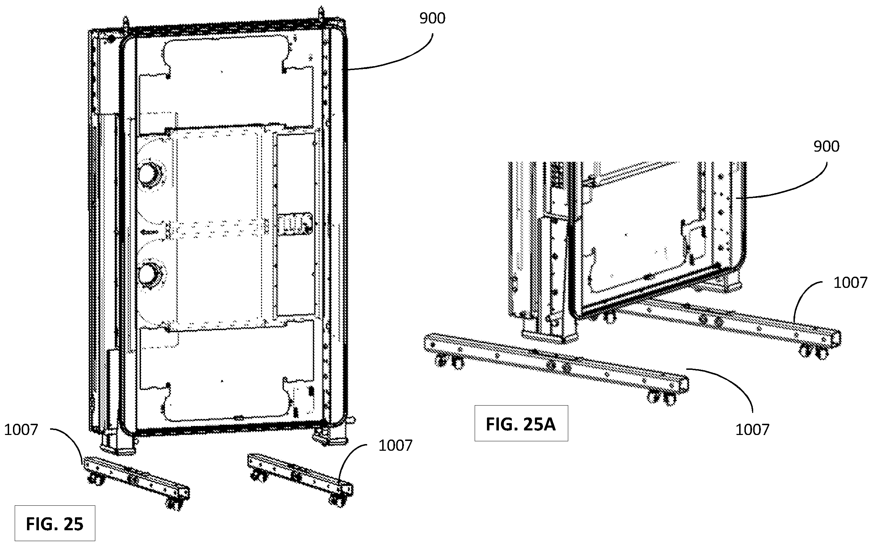

Figure 25 shows a chassis of the display of Figure 23 as a perspective view, with skids to form a wheeled transport jig, with Figure 25 showing a detail view;

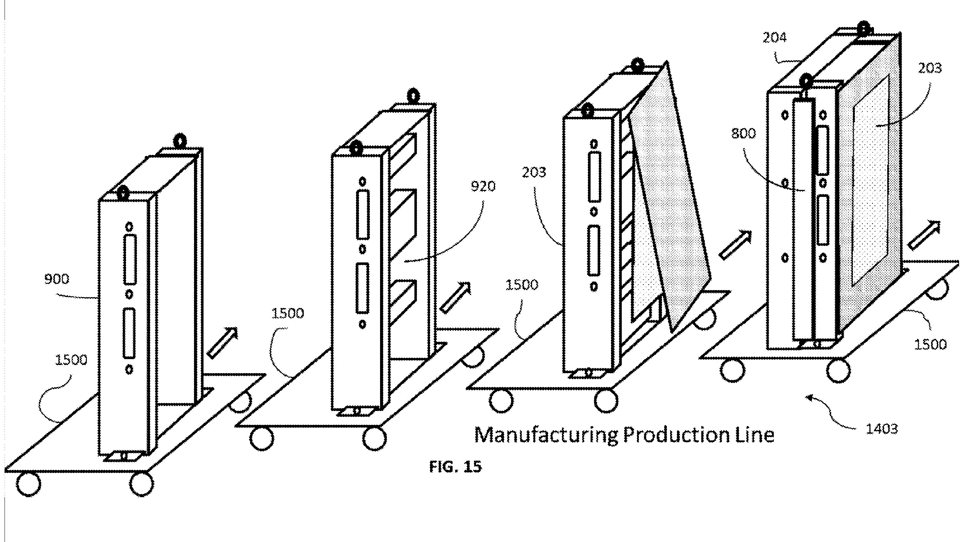

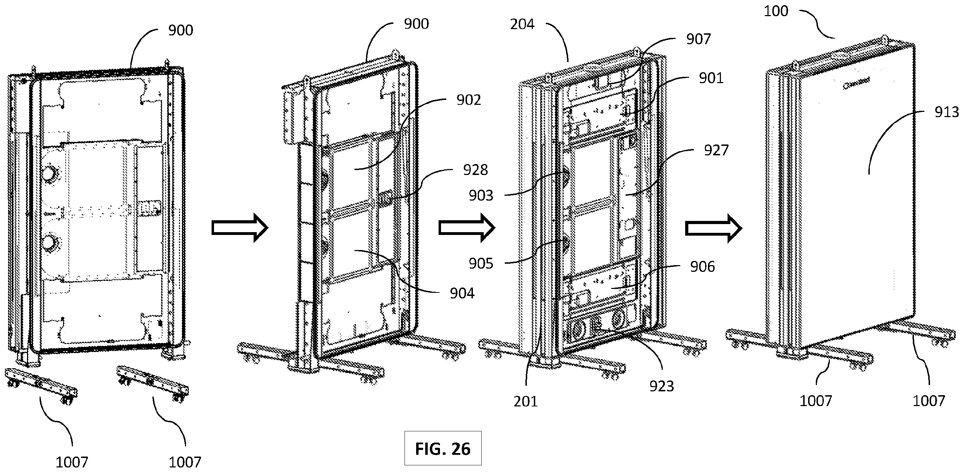

Figure 26 is a view similar to Figure 15, illustrating a manufacturing process;

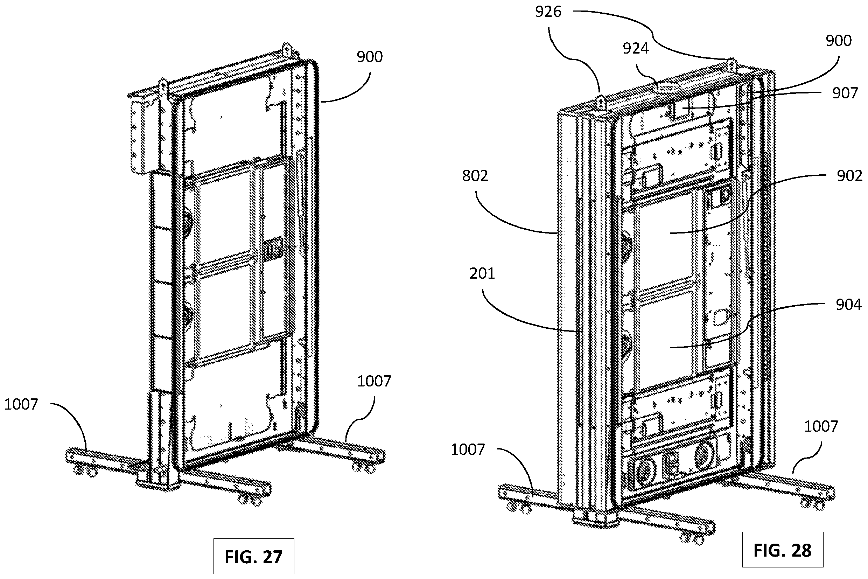

Figures 27 and 28 are perspective views from Figure 26, to a larger scale;

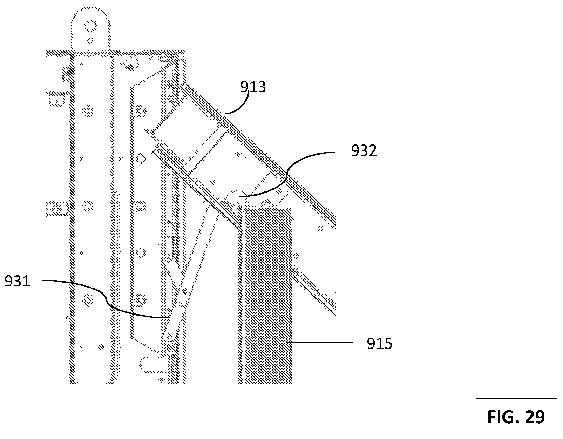

Figure 29 is a side view to show details of an LCD panel mounted on the frame of a glass door;

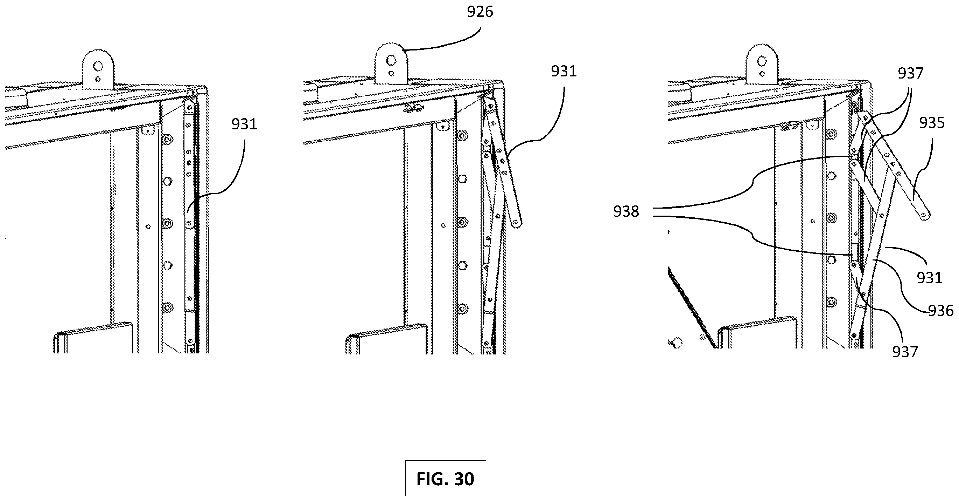

Figure 30 illustrates successive stages of opening of a hinge mechanism for the glass door of the display;

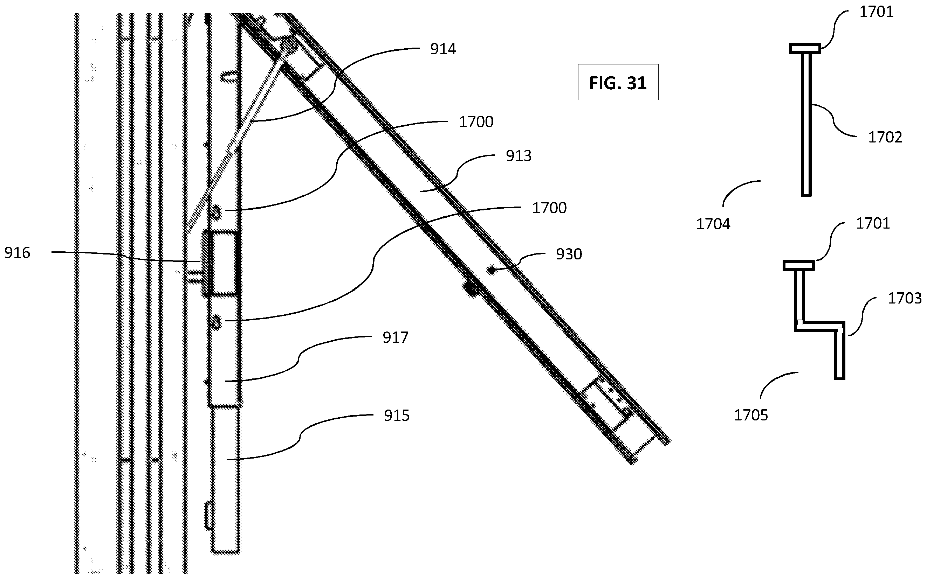

Figure 31 is a further detail view of the opening glass door together with handles for handling the LCD display;

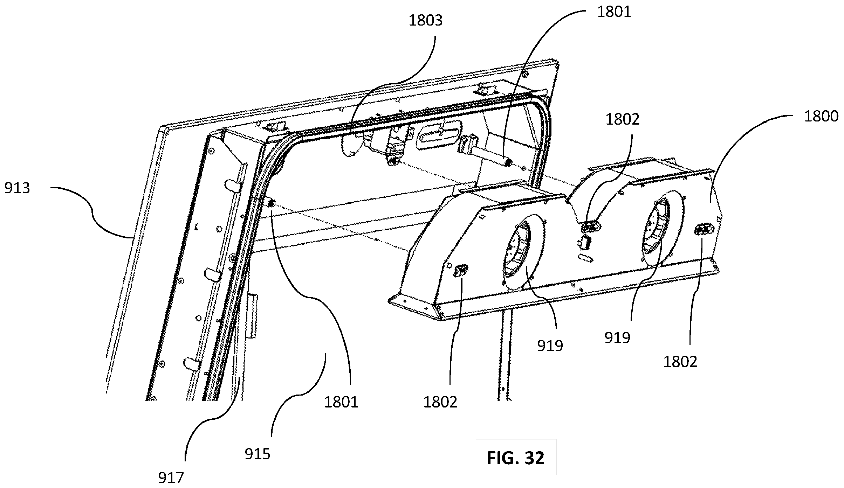

Figure 32 is a part exploded view to show a fan box mounted on the glass door of the display;

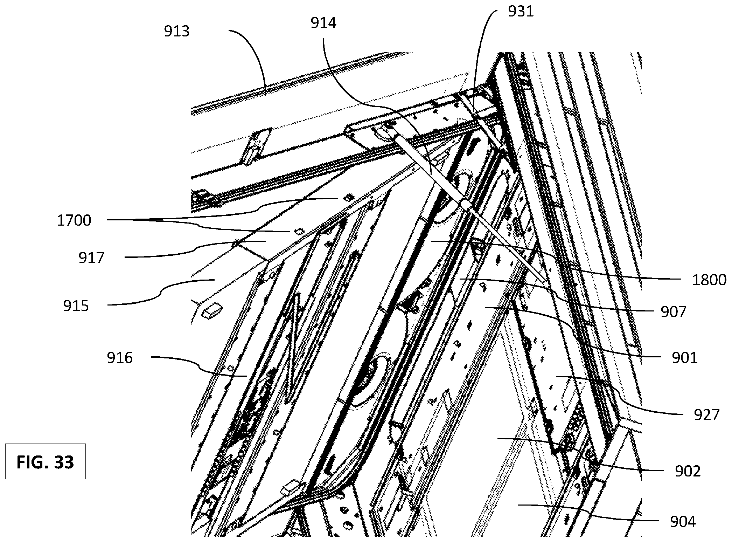

Figure 33 is a detail view of the mounting of the fan box;

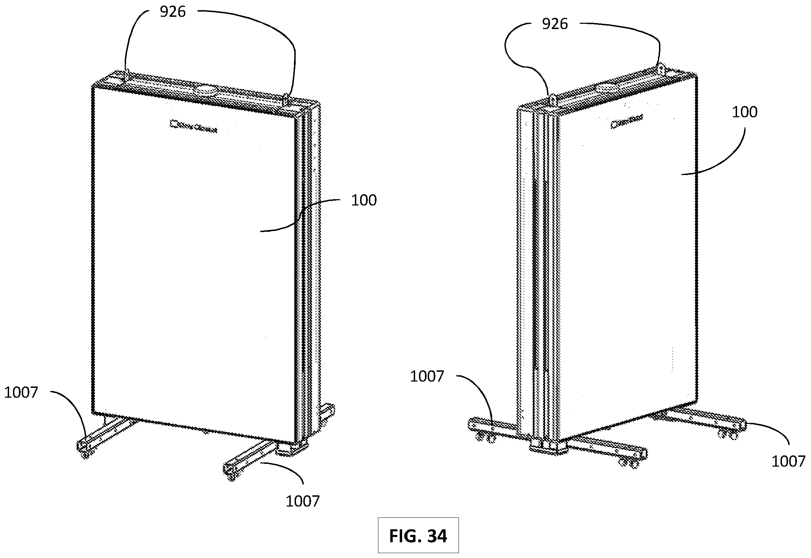

Figure 34 shows perspective views from the front and opposite sides of the display, mounted on transport skids;

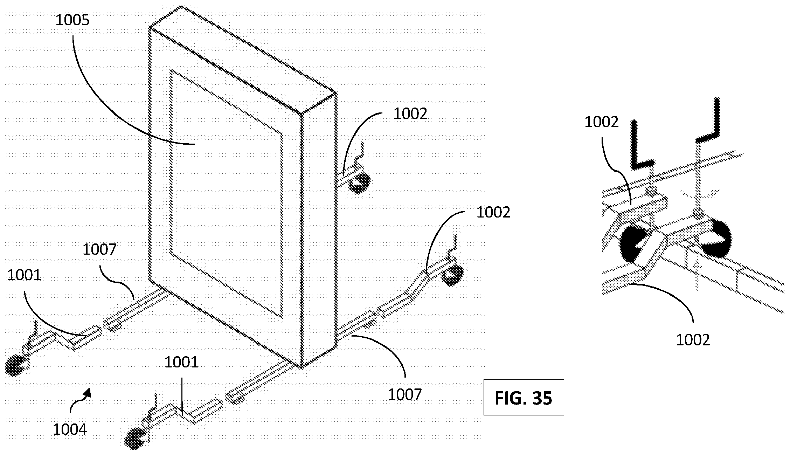

Figure 35 is a perspective view of the display on transport skids with jockey wheels, with a detail view of jockey wheels;

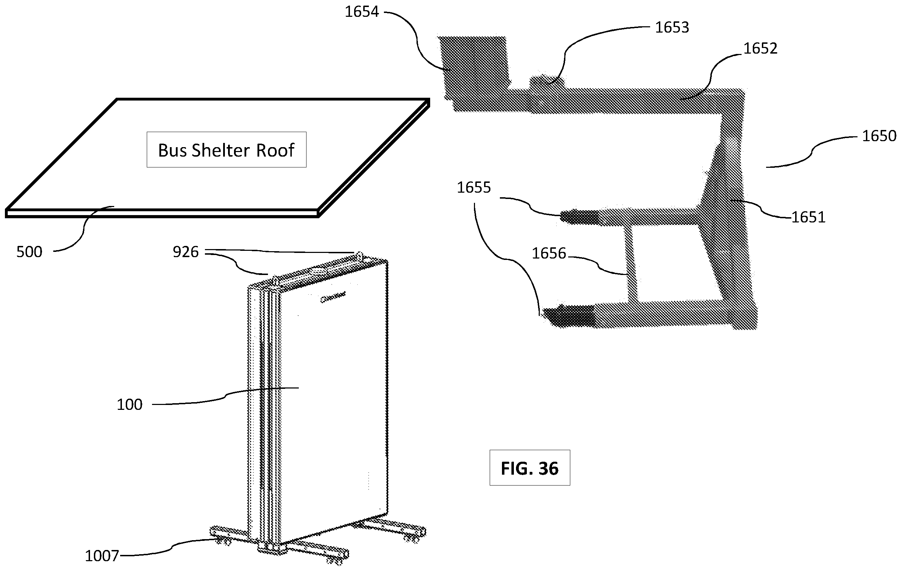

Figure 36 is a perspective view of a C-lift frame for lifting the display and installing it under an obstacle such as a bus shelter roof;

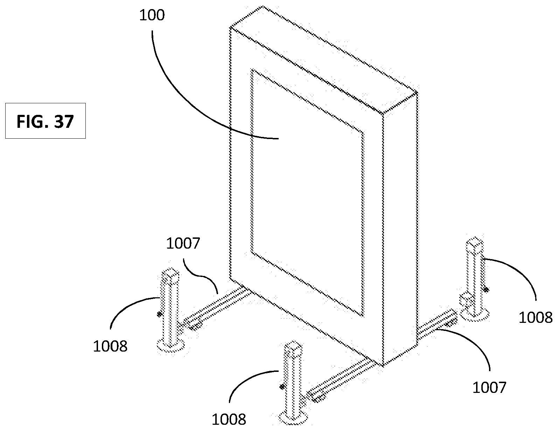

Figure 37 shows the display on transport skids, along with jacks that fit to the skids to adjust the height of the display;

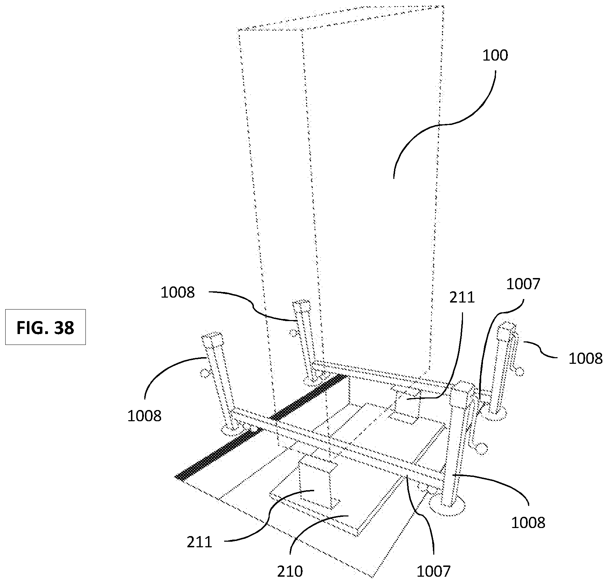

Figure 38 illustrates the display supported by skids and jacks above a foundation plate that is set in place by concrete, which is curing;

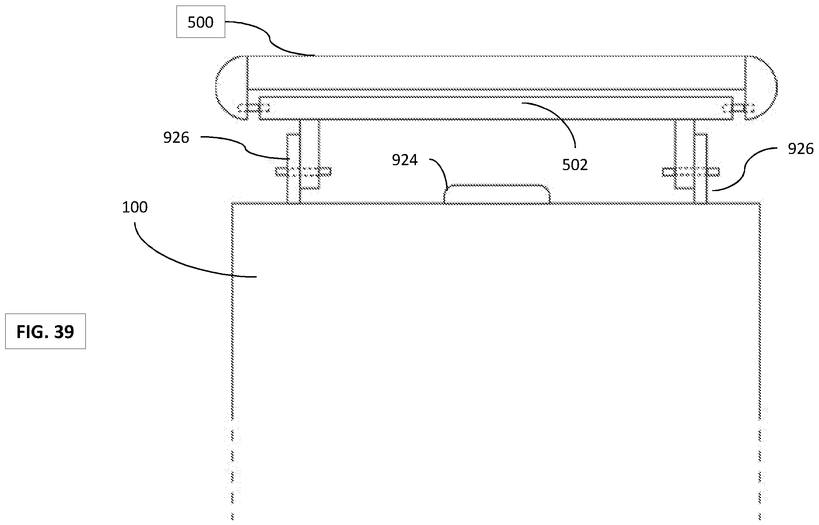

Figure 39 illustrates fixings between the display and a bus shelter roof;

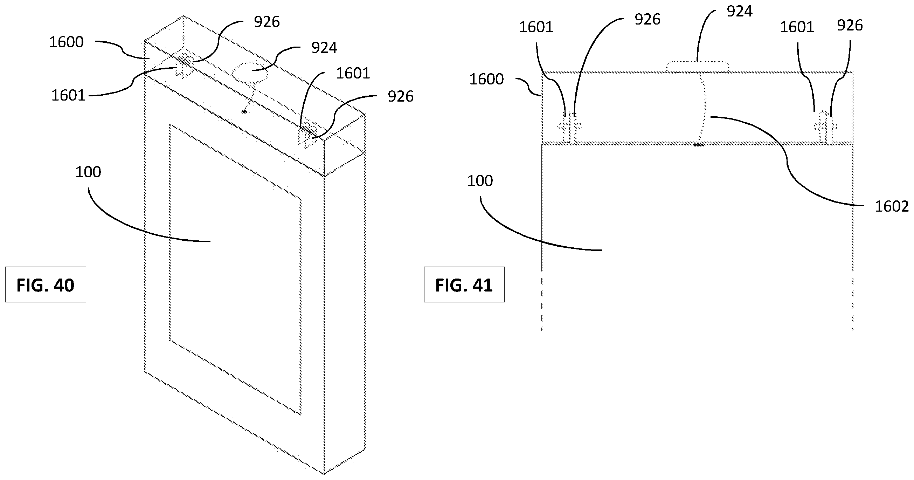

Figures 40 and 41 illustrate a top box cladding option for the top of the display, respectively in perspective and front elevation;

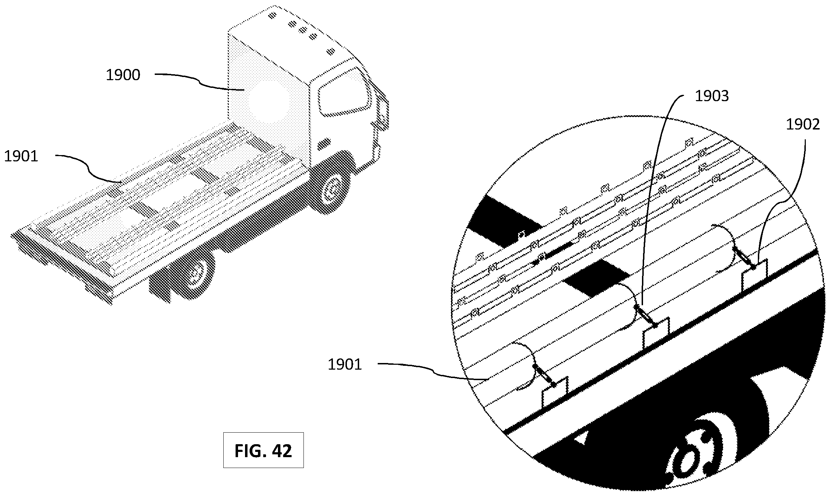

Figure 42 is a perspective view, with a detail insert, to show a novel transport system for displays;

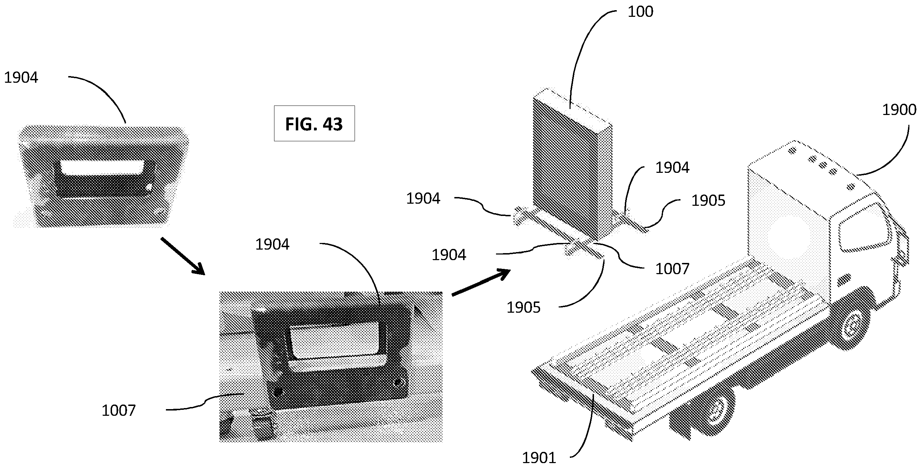

Figure 43 illustrates details of the novel transport system and means of loading onto transport;

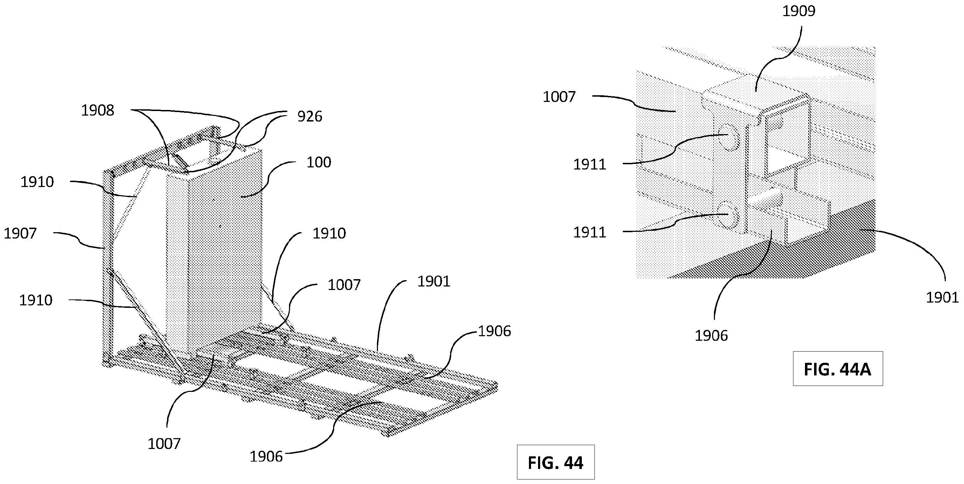

Figure 44 illustrates a display mounted on a transport frame, with Figure 44A showing detail of fixing transport skids to rails;

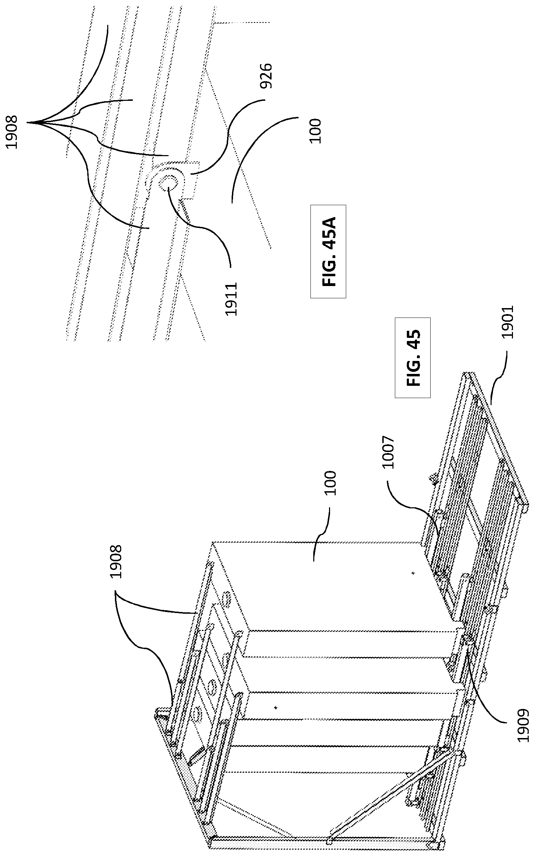

Figure 45 illustrates several displays mounted on the transport frame, with Figure 45A showing details of bracing elements;

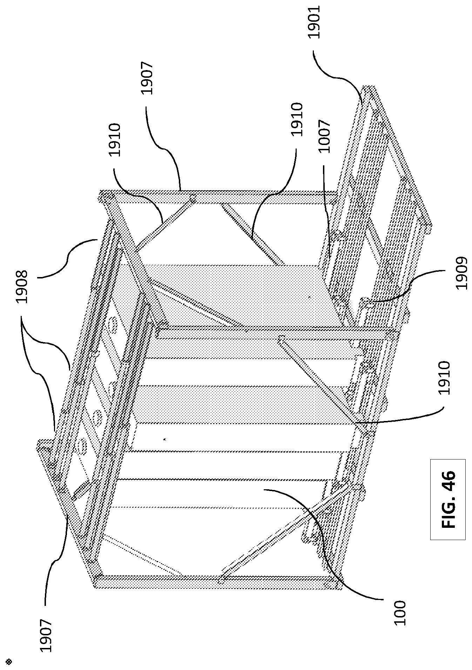

Figure 46 is view similar to Figure 46 but showing both lower fixings and upper bracings to secure a block of displays on the transport frame;

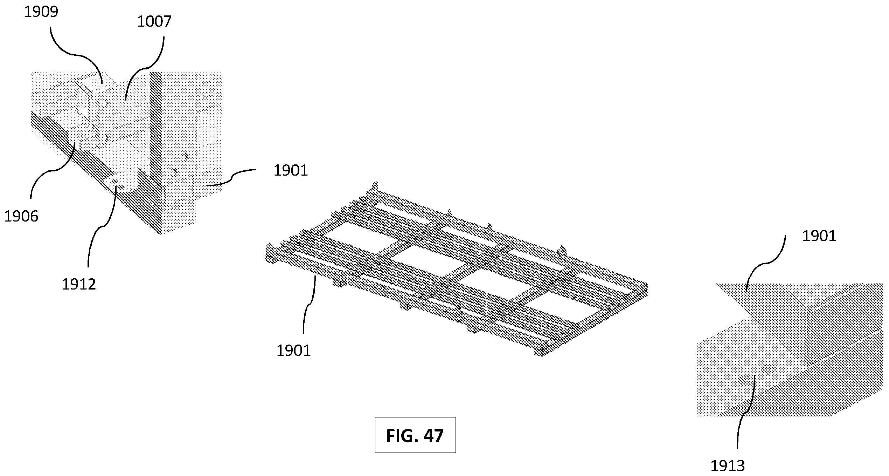

Figure 47 shows details of the transport frame and fixings to connect adjacent transport frames; and

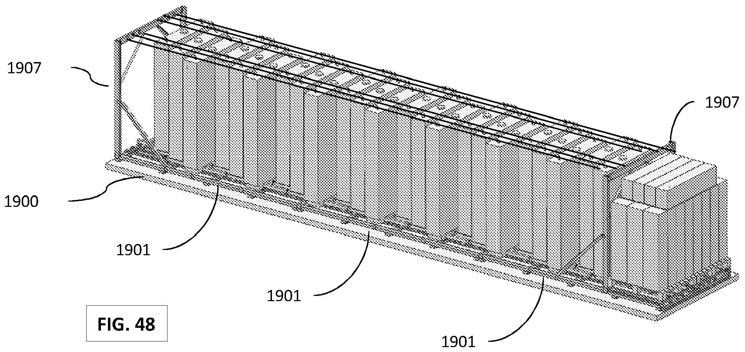

Figure 48 illustrates a plurality of interconnected transport frames on the load bed of an articulated lorry, carrying many displays.

It is to be understood that the various features that are described in the following and/or illustrated in the drawings are preferred but not essential. Combinations of features described and/or illustrated are not considered to be the only possible combinations. Unless stated to the contrary, individual features may be omitted, varied or combined in different combinations, where practical.

In the figures, like references denote like or corresponding parts.

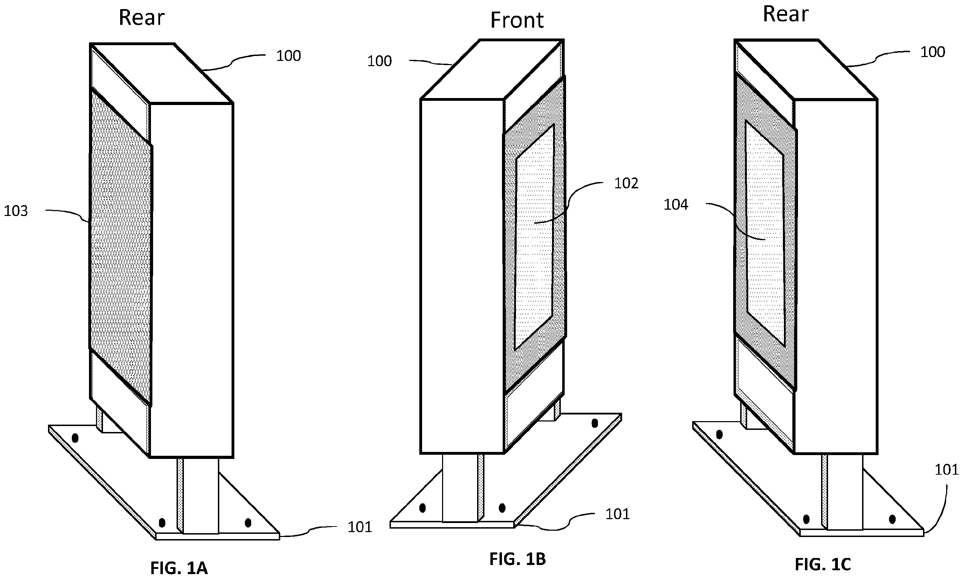

Figures 1A to 1C show a display 100 with a forward-facing electronic display panel 102 and a choice of rear-facing display panels 103, 104, mounted on an optional plinth 101 that provides structural support to ground. The plinth 101 and associated fixings may be of variable structural qualities to meet the needs of the application e.g. to cater for high wind loading (horizontal forces) or high structural loading (vertical forces) for applications such as bus shelters loaded with snow. The plinth 101 may sit fully beneath ground or directly on top if there is sufficient strength in the ground construction.

The rear-facing display panel 103 may be, for example, a static backlit poster panel or a scrolling backlit poster panel. The alternative rear-facing display panel 104 is an electronic display panel similar to the forward-facing electronic display panel 102. The electronic display panels 102, 104 are large-scale electronic display panels with a minimum visible screen size of approximately 50 inches (127 cm) and preferably 70 inches (178 cm) or more, measured diagonally across the screen.

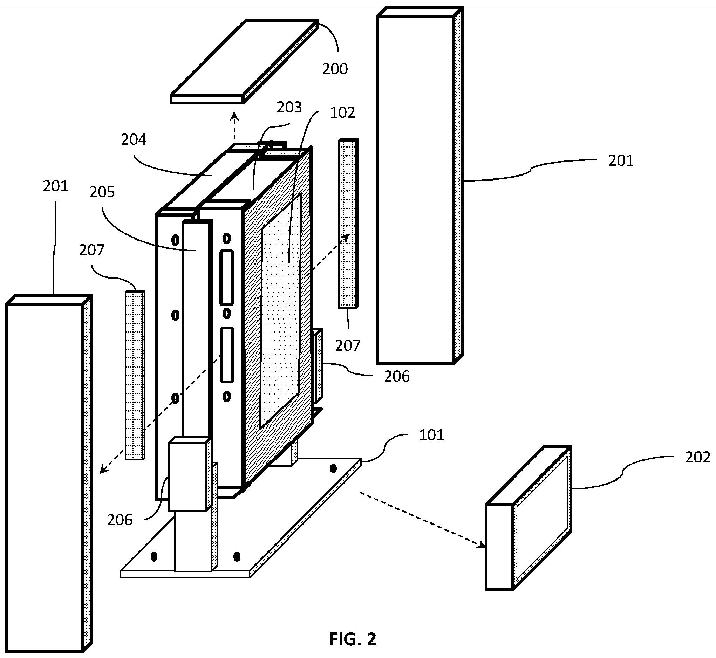

As shown in Figures 2 and 3, a display may be formed from a front digital screen module 203 and a rear module 204 that may take various optional forms such as a blanking plate, a static backlit poster module or a scrolling backlit poster module. The front and rear modules 203, 204 are secured together by fixings 205 which in turn are fixed to plinth 101 by fixings 206. Customisable top, side and front claddings 200, 201 and 202 afford a desired external appearance to the display, with air filters 207 (for a cooling system) fitted prior to adding the side cladding 201; or accessible from the front when the glass door is opened. The outer cladding for the display may be standard, custom, branded, creative designed, cosmetic and of any type of material such as metal, wood, Corian, plastics, etc. It may be of varied height and shapes. It may be an extension of the environment that it is integrated with.

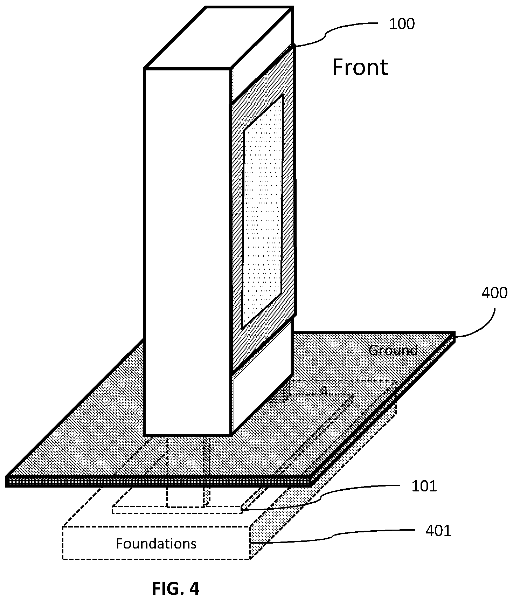

Figure 4 illustrates a free-standing configuration of display 100, in which it is secured to plinth 101 that sits on solid foundations 401, such as concrete or a secure structure, established below ground level 400.

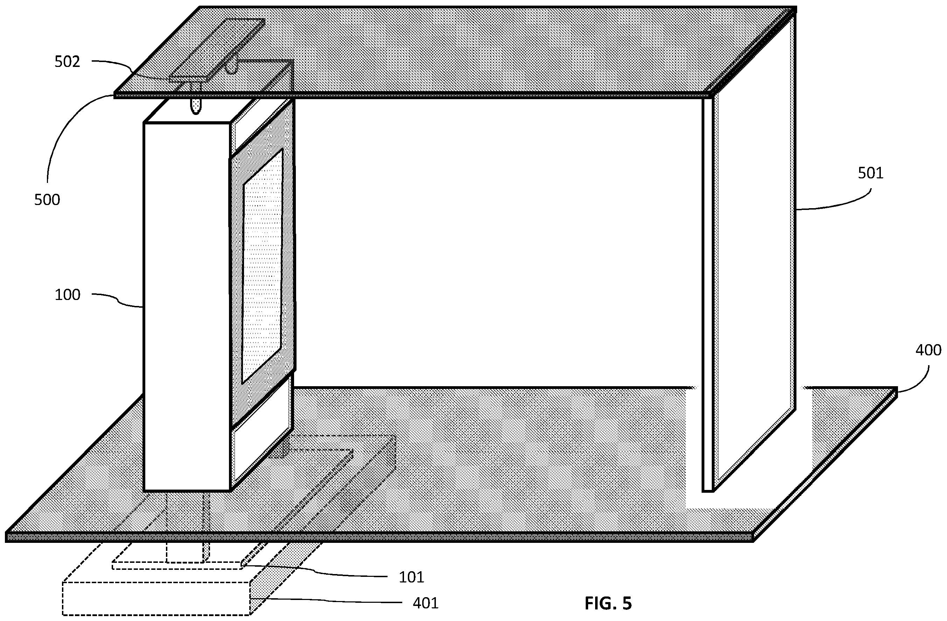

Figure 5 illustrates an "integrated" configuration of display 100 in which the top of the display 100 is secured by a "dropper" 502 to the roof 500 of a bus stop that has a side 501 to provide structural support to the roof 500, which is also supported by the display 100.

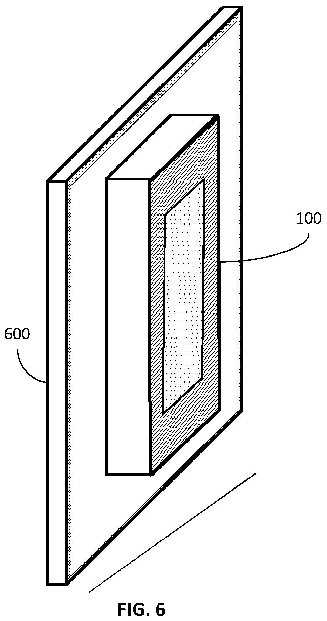

A wall-mounted configuration of display 100 is shown in Figure 6, where the display is mounted in a structurally supported wall 600.

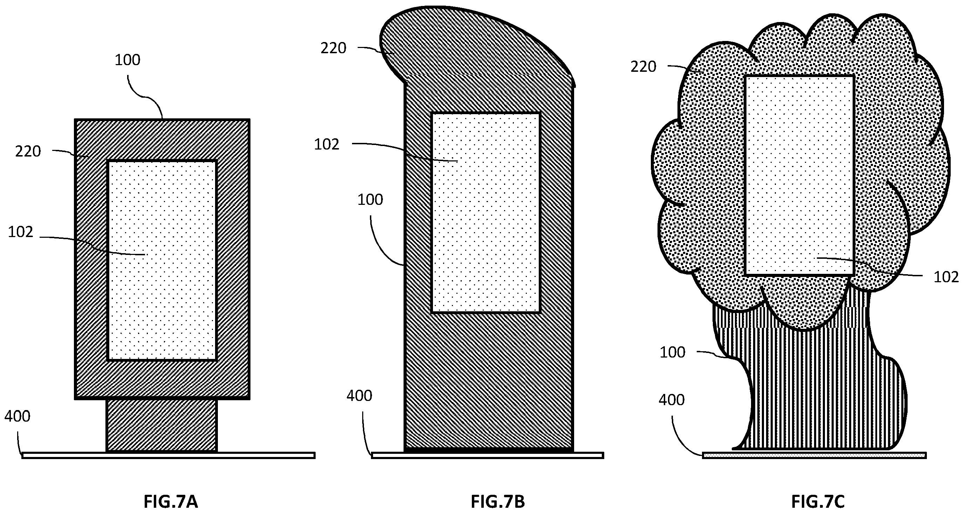

Figures 7A to 7C show various styles of cladding 220 around display panel 102, which is disposed at differing heights above ground level 400, thereby giving different appearances to the display 100. The components of the claddings 220 are affixed around the display 100 by fixings at modular spacings, so that they may readily be interchanged with components of different looks and feel.

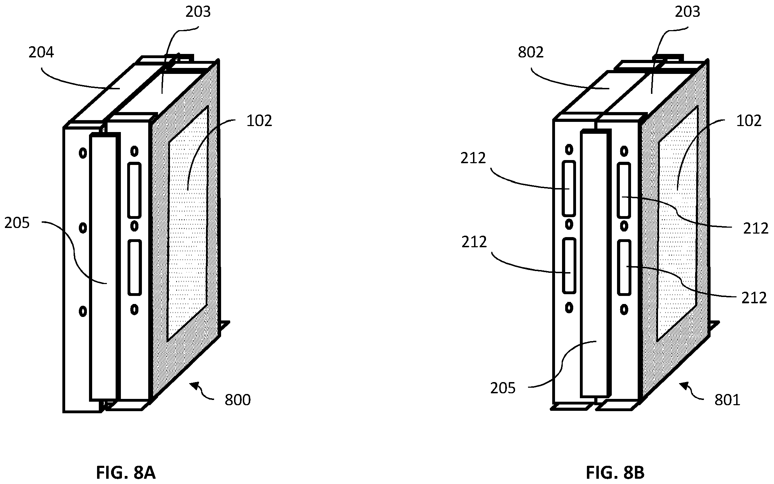

Figure 8A shows a combined advertising display 800 constructed from a front digital electronic display module 203 and a rear display module 203 that may be, for example, a static backlit poster panel or a scrolling backlit poster panel. Figure 8B is a similar view of a double-sided (back-to-back) digital advertising display 801 constructed from two single digital screen modules 203 and 802. The rear display module 802 may be of generally the same configuration as the front display module 203. However, a heat-exchanger unit within the rear display module 802 for cooling purposes is oppositely handed, as compared to the front display module 203, such that air intakes 212 for the heat exchanger units of both of the modules 203, 802 are all at one common side of the display 801. Corresponding air outlets (not shown in Figure 8B) for the heat exchanger units of both of the modules 203, 802 are located at a common, opposite side of the display 801. This ensures that 'dirty' air output from one of the display modules 203, 802 does not contaminate the 'clean' air input of the other of the display modules. Fan modules at the side of the display 800 may pump external air from external vents through the heat-exchangers, such that the hot air expels at the opposite side to the inlet side.

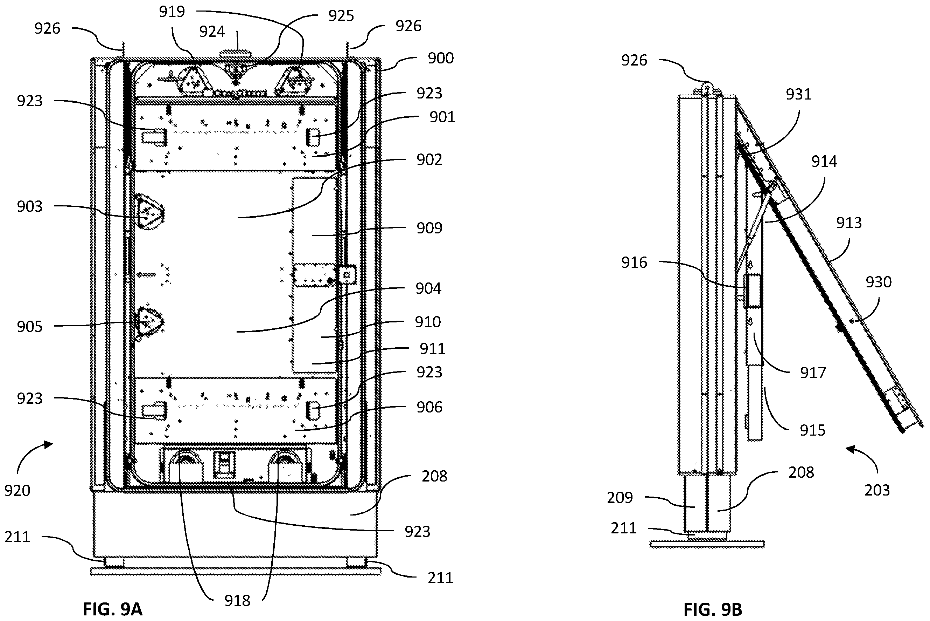

Figure 9A is a front view showing internal components of digital display module 920 with a toughened glass door and LCD panel removed and Figure 9B is a side view of the display module 203 with the glass door 913 open and the LCD panel 915 brought forward.

Typical components within the display module 920 without glass door are mounted within a metal chassis 900 and include a top environmental control unit 901, a top heat exchanger 902 and a top pair of circulating fans (919) made up of two top external fans 903. At the lower end of the chassis 900 and provided a bottom heat exchanger 904, a bottom pair of circulating fans 918 made up of two bottom external fans 905 and a bottom environmental control unit 906. For controlling the display module 203 and providing data to and from it there are provided a router, an optional Ethernet switch, PC (Personal Computer or other processing device) 909, monitoring and control board 910 and Solid State Drive 911. The PC or equivalent (909) may be mounted on a fold-out panel such that, in normal use, it is substantially flush with the surface of the heat-exchangers 902, 904 or other parts, but is folded out to access the PC for programming or service. Other components may be mounted in a similar manner.

For cooling, a bottom pair of circulating fans 918 and a top pair of circulating fans 919 are provided. The chassis 900 houses power supply assemblies 923. Such circulating fan modules and associated power supplies top and bottom of the unit circulate cool air across the front and rear of the LCD panel 915. An antenna 924 and a camera 925 are provided at the top of the chassis 900, along with a pair of external lifting and fixing ears 926.

A respective gas strut 914 is provided at each side of the glass door 913, which is mounted on the chassis 900 by a hinge 931. A boss 930 on glass door 913 allows a strap with a bracket to slot over the boss 930 to assist lifting and securing of the LCD panel 915 to the glass door 913. The LCD panel 915 is supported on a bracket 917 that carries a video scaler, upscale and timing control 916 for the panel 915.

The chassis 900 is mounted on a pair of C-brackets that are secured to a foundation plate 210 or other supporting surface that may be above or below ground level and may bridge utility pipe works, etc. Front and rear claddings 208, 209 cover the C-brackets 211.

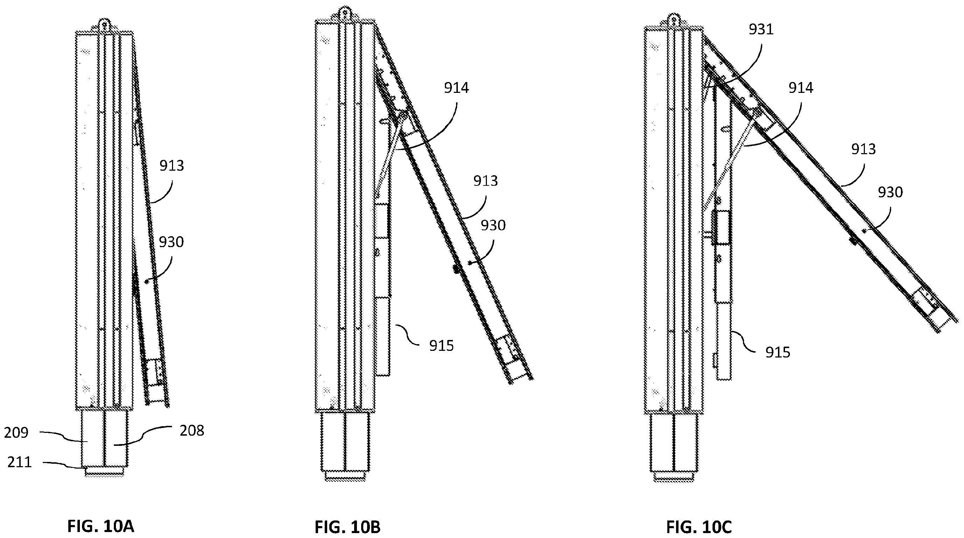

Figures 10A to 10C show sequential steps in the opening of the glass door 913, which pivots upwardly about the front door hinge 931. Preferably, as described in further detail below, the hinge 931 is such as to move the glass door 913 forward, away from the chassis 900, as it pivots upwardly. As may be seen, the LCD panel 915 is brought forward with the glass door 913 as it pivots upwardly. The panel 915 is carried on the hinge 931 or other component such that it hangs down from the glass door 913, for ease of access for service or replacement. It will be appreciated that, in large-scale electronic displays, an LCD panel or the equivalent will generally be very heavy. Thus, affording ready access to the LCD panel 915 as illustrated in Figures 10A to 10C is very advantageous.

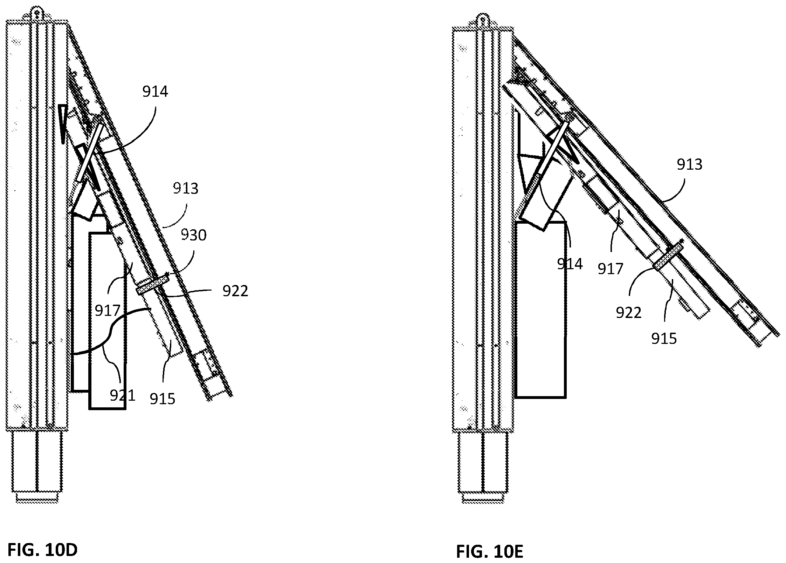

Figures 10D and 10E are similar to Figures 10B and 10C but, in this case, the LCD panel 915 is secured to the glass door 913 by means of a bracket and strap 922 that engages with the boss 930 on the glass door 913. Therefore, as the glass door 913 opens by pivoting upwardly, the LCD panel 915 pivots upwardly with it, thus affording ready access to the interior of the chassis 900 to enable ready servicing of the components within it. Preferably, the components of the display module are arranged in a modular fashion such that modules of various different functions can readily be accessed from the front of the chassis 900 and readily swapped for service or repair. A boss 930 and bracket and strap 922 may be provided on each side of the glass door 913, to secure the LCD panel 915 to the door 913. By way of example, the glass door 913 may be open to an angle of about 45°, to afford access to the LCD panel 915 and/or to the inside of the chassis 900. The LCD panel 915 may be connected to components within the chassis 900 by one or more cables 921 that may readily be disconnected and reconnected, to allow the LCD panel 915 to pivot upwardly and/or to gain access behind the panel 915 to components or sub-assemblies within the chassis 900. Examples of such cables are as follows.

The top environmental control sub-assembly 901 controls and monitors the top portion of the LCD backlight within the LCD display panel 915, and the bottom environmental control sub-assembly 906 controls and monitors the bottom portion of the LCD backlight within the display panel 915; using cabling such as ribbon cables and connectors such as D-type connectors, for example, which can be easily disconnected to allow the LCD panel 915 to be moved away from replaceable sub-assemblies located behind the LCD panel 915.

The PC board 909 on board control sub-assembly 927 provides a video connection to the LCD display panel 915 using typical means such as an HDMI interface and associated cables and connectors, which can be easily disconnected to allow the LCD panel 915 to be moved away from replaceable sub-assemblies located behind the LCD panel 915.

The monitoring and control board 910 on board the control sub-assembly 927 provides a communication connection to sensors on the display panel 915 using typical serial communication means such as I2C, CAN BUS etc and using associated cables such as ribbon cables and connectors such as IDC or D-Type connectors, which can be easily disconnected to allow the LCD panel 915 to be moved away from replaceable sub-assemblies located behind the display panel 915.

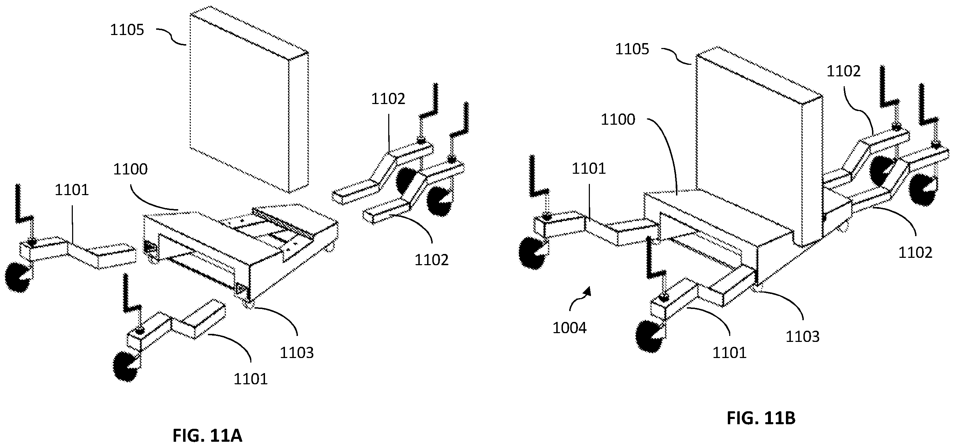

Figure 11 a shows a transport jig 1100 that is formed on its upper surface with a recess adapted to receive a display module 1105 for transport. The transport jig 1100 is provided with wheels (which term includes rollers or casters) 1103 such that it can readily be rolled over a surface. It is also provided with a set of removable outriggers 1101, 1102 that are adapted to interengage with the transport jig 1100 and are provided with multidirectional casters, the heights of which may be adjusted in the manner of jockey wheels. The wheels 1103 on the transport jig 1100 itself may be of fixed or adjustable height.

Figure 11B shows the display module 1105 and the outriggers 1101, 1102 engaged with the transport jig 1100. In this configuration, the heavy display module 1105 can readily be transported across a surface. In one example, item 1105 is initially a chassis with structural strength, for a display module to be assembled on the chassis. The chassis may conveniently be transported on the transport jig 1100, with or without the outriggers 1101, 1102 from a chassis supplier to a display manufacturing plant. In the manufacturing plant, the chassis is wheeled along a production line, with or without the outriggers 1101, 1102, where components (already in sub-assemblies where appropriate) are progressively fitted to the chassis, in order to form the display module. A completed display module 1105 may continue to be transported on the transport jig 1100, with or without the outriggers 1101, 1102, for both warehouse storage and subsequent transport and on-site installation.

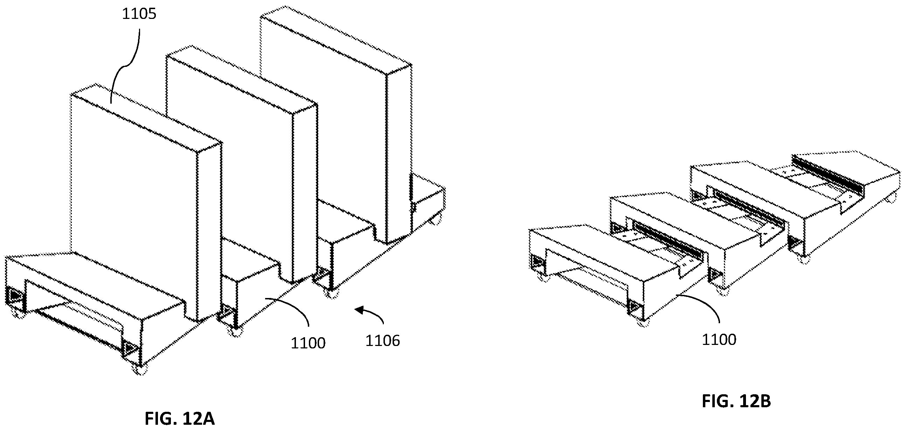

Figure 12A shows a set 1106 of display modules 1105 on respective outriggers 1100 and Figure 12B shows the transport jigs 1100 without the display modules 1105. As may be seen, the transport jigs 1100 taper from back to front and are adapted to nest with one another and/or interlock in order to minimise floor space and to enable more efficient storage of display modules 1105 in transport and in warehouse.

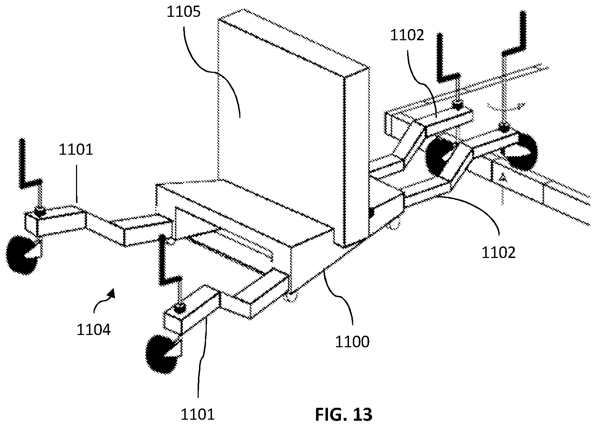

In Figure 13, a loaded transport jig 1104 with outriggers 1101, 1102 is shown navigating a raised kerb. The casters on the leading outriggers 1102 are respectively lowered and raised in order that a leading caster can mount the kerb, following which the adjacent caster is then raised, so that it too can mount the kerb.

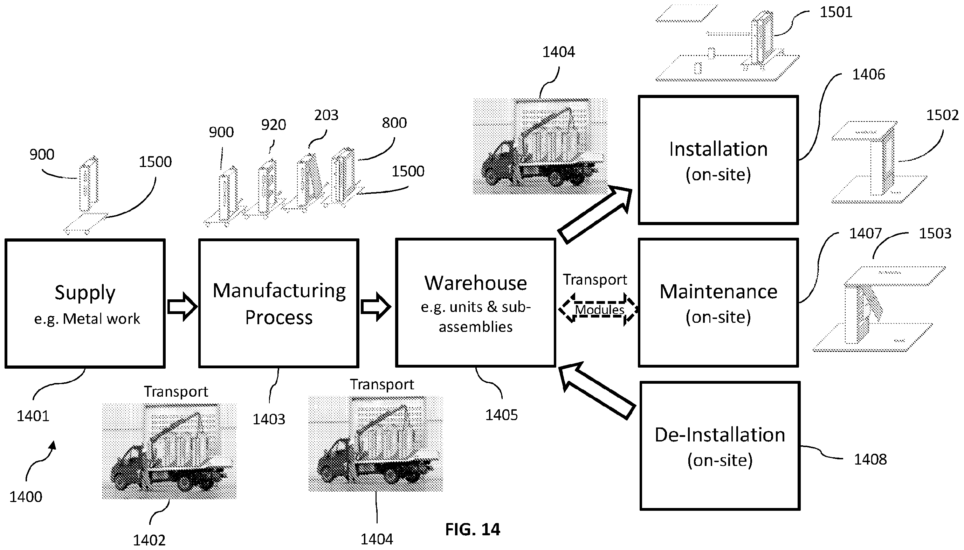

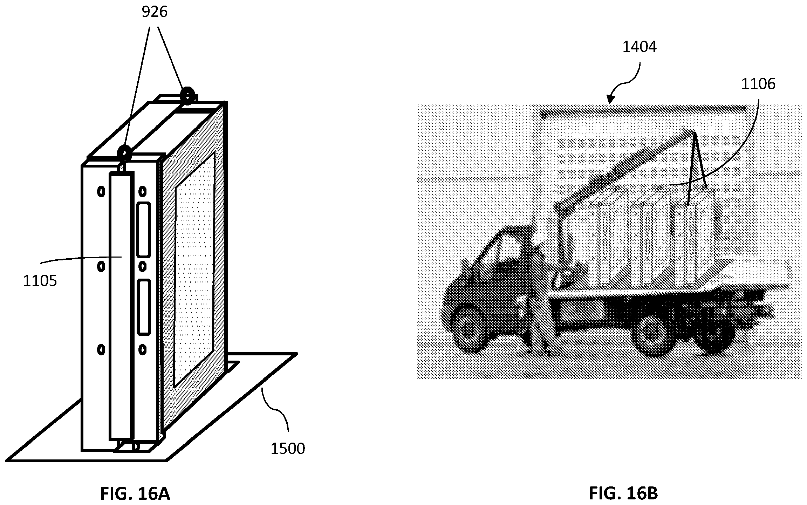

Figure 14 shows an end-to-end scalable digital display process 1400 from supply, through manufacture, storage and transportation to site, installation maintenance and ultimately de-installation. Figures 15, 16A and 16B show steps of the process to a larger scale.

In step 1401, metalwork is supplied as chassis 900 mounted on a wheeled transport jig 1500 suitable for a manufacturing environment where there are no obstacles. In step 1402, a number of chassis 900 mounted on respective transport jigs 1500 are transported in an upright position - e.g. on flatbed trucks, where they can be lifted on and off by simple lifting and passed directly to a production line. Shipping the chassis 900 from a supplier, already fitted to the transport jig 1500, can facilitate transportation from the outset.

In step 1403, each chassis 900 on its respective jig 1500 is wheeled down the production line and populated with components / subassemblies from the front (i.e. accessed from the front of the chassis), starting with the rear components / assemblies etc and building up the assembly, working with successive components / assemblies from rear to front. Thus, for example, each unit may progress on its transport jig 1500 from chassis 900 to assembled display module 920, without glass door, to completed display module 203 with glass door, to combined front and rear display modules 800. For example, the components fitted to the chassis 900 may comprise heat exchange assemblies (top and bottom); fan assemblies (top, bottom, external) and associated ducting; environmental control assemblies (top, bottom); internal network; video circuits; main PC board; power monitoring & control board; battery; main power assemblies distributed (e.g. to provide local power for fans, LED backlighting strips etc); LCD panel; Glass door, etc., all supplied as modular replaceable sub-assemblies.

In step 1404, assembled display modules are transported to warehouse 1405 or directly to site in a way that maximise storage on the truck (or other transport means) and minimises handling of the display modules. Thus, the display modules can continue to be transported vertically on their jigs 1500 from initial supply at step 1401 to eventual installation at step 1406, obviating any reorientation of the heavy display modules.

In step 1405, assembled display modules are readily stacked on their transport jigs 1500 in such a way as to maximise floor space and storage capacity - for example, with nesting of the transport jigs as described above.

Step 1406 indicates an on-site installation process, still using the same transport jig 1500 to position the display module in situ. Positioning of the display module is indicated at 1501. 1502 indicates a display module that has been installed at, for example, a bus stop shelter, with a display panel facing outwardly.

Step 1407 indicates simple on-site maintenance by opening the glass door of the display module such that it brings an LCD panel forward in order to access and swap components and/or sub-assemblies within the chassis. 1503 indicates the front glass door opened.

Step 1408 indicates a de-installation process, where a display module may be removed from site and, using a transport jig as before, returned to the warehouse for disposal or refurbishment.

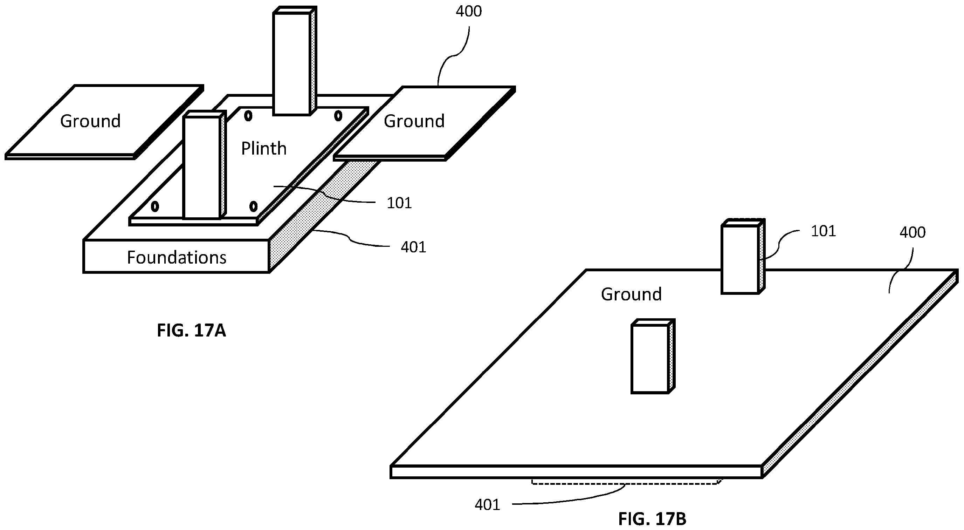

Figures 17 to 22 illustrate how a large-scale electronic display is installed as part of a bus stop or shelter, having a roof 500.

In Figures 17A and 17B, a plinth 101 with upstanding support struts is fixed to foundations 401 (e.g. concrete) and the ground 400 is made good above the foundations 401. The plinth 101 may alternatively protrude or be bolted to a foundation laid above ground 400 - e.g. where there is a camber in the ground.

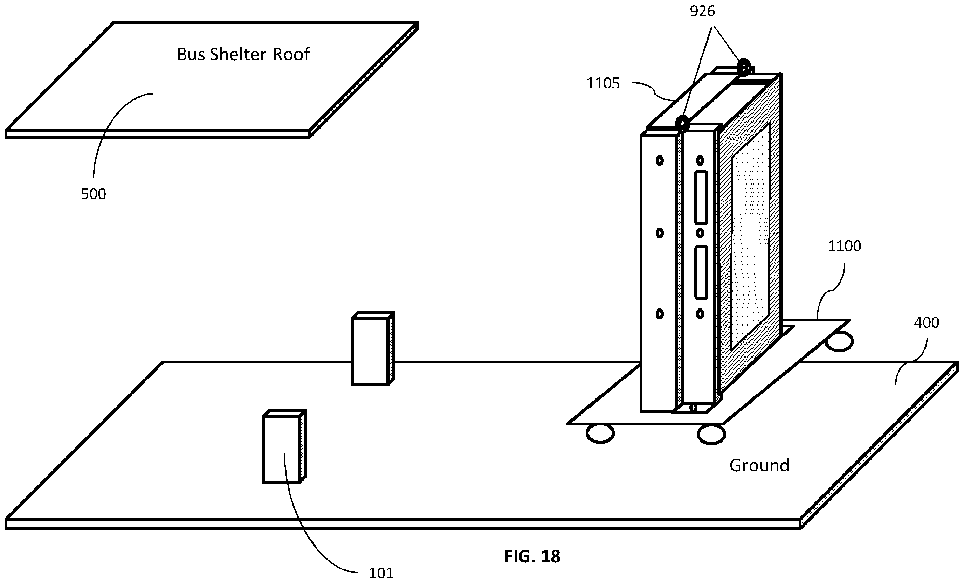

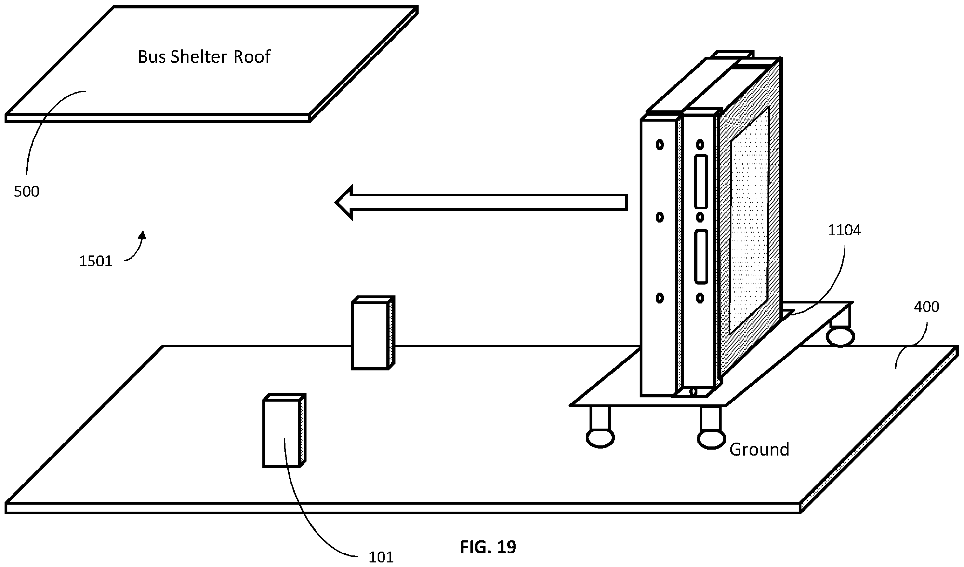

In Figure 18, a display 1105 is lifted off its transport (e.g. flatbed truck) using lifting ears 926 and lowered onto ground 400, still fixed to its wheeled transport jig 1100. In Figure 19, the loaded transport jig 1104 is pushed towards the bus shelter roof 500 and the upstanding struts of the plinth 101. The transport jig may be tapered as described above, in order that it may fit between the struts of the plinth 101. Figure 19 corresponds to item 1501 in Figure 14.

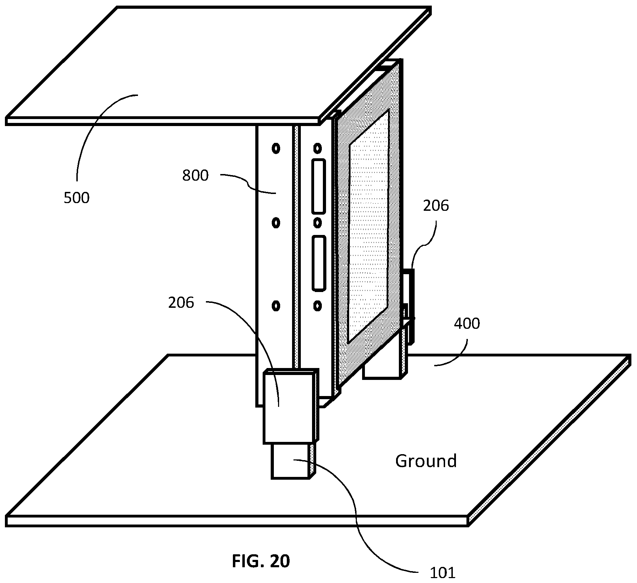

Figure 20 shows a double-sided digital display 800 secured to the upstanding struts of the plinth 101 by fixings 206, with the transport jig then removed, after which it may be returned for re-use as part of the manufacturing flow, eliminating the need for specialist installation equipment - e.g. suction equipment such as Gekos. Where there is no height restriction - for example, where the display is a freestanding unit not located under a roof such as in the bus shelter, then the display can be directly lifted and fixed to the struts of the plinth 101 using standard lifting gear (e.g. HIAB), without the need for the transport jig once the display has been unloaded.

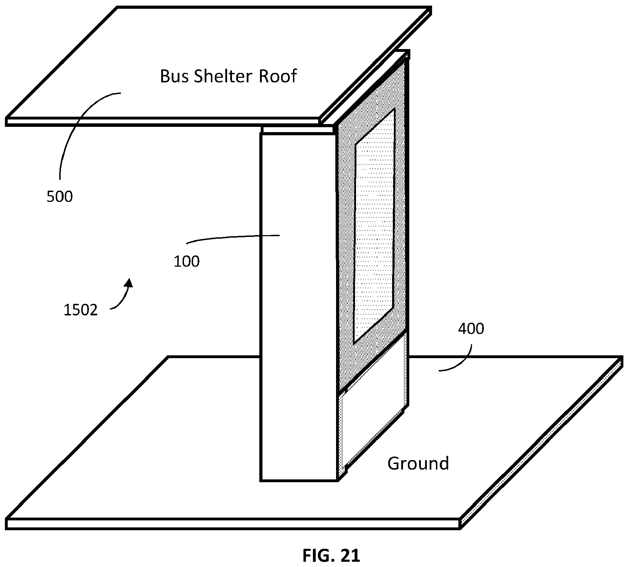

In Figure 21, which corresponds to item 1502 of Figure 14, top, side and front cladding is fitted for cosmetic appearance. In addition, easily changed and cleanable air filters are located between the cladding and the cooling system of the display, which filters can be cleaned by low-skilled operatives as part of a cleaning process, without opening the glass door of the display. The display is secured to the bus shelter roof via a 'dropper', such that the display 100 provides structural support for the bus shelter. As indicated above, any cladding for any creative "look and feel" can be fitted to the display, using a modular fixing system. Likewise, any rear display module can be supported, including a configuration of two back-to-back digital screens, which may be fitted together on-site or as part of the manufacturing process.

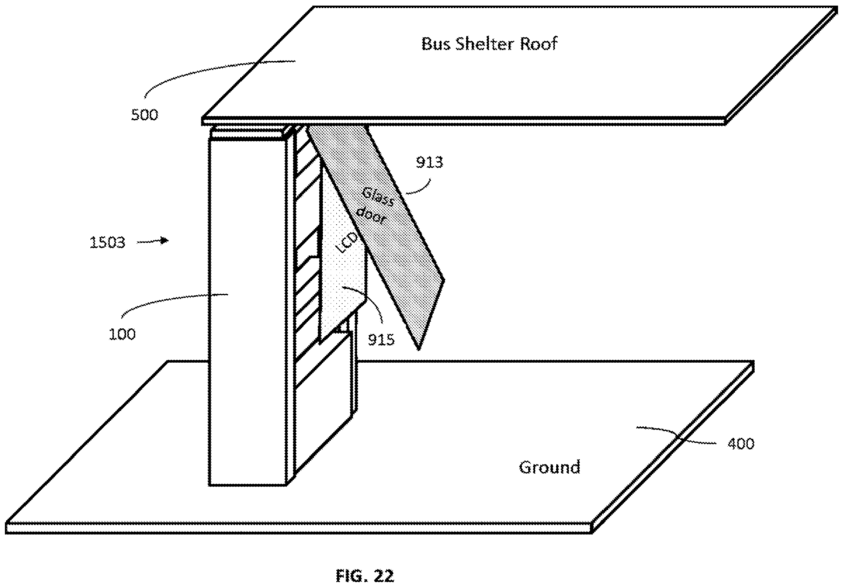

In Figure 22, which corresponds to item 1503 of Figure 14, digital LCD panel 915 faces inwardly with respect to the bus shelter. A rear advertising poster may be changed as required - e.g. typically on a two-week cycle. Glass door 913 of display 100 may be opened upwardly to bring the LCD panel 915 forward, either connected to the glass door 913 to facilitate access within the chassis of the display for servicing and swapping components and modules within; or left to hang from the glass door 913 or its hinge, to facilitate access to the LCD panel 915 for service or exchange. Alternatively, digital LCD panel 915 may face outwardly with respect to the bus shelter.

Figures 23 to 41 illustrate alternative design features of large-scale electronic displays.

Display 100 in Figure 23, with detailed views in Figures 23 a and 20 3B, is mounted on C-brackets 211 to support the display 100 on foundation plate 210. Front and rear plinth cladding is 208, 209 cover the C-brackets 211. Lifting and fixing ears 926 are provided on the top of the display 100, along with an antenna 924.

Figure 24 shows the display 100 in exploded view, similar to Figure 3, with customisable top cladding 200 and side cladding 201. In this example, the display comprises a front digital panel module 203 and rear module 204 that can be of any desired configuration.

Figure 25 shows display chassis 900 above a pair of skids 1007 that carry wheels, rollers or casters. The chassis 900 is secured to the skids 1007 by C-brackets or other fixing means. The wheeled skids 1007 thus provide a wheeled transport jig (1000) for transport of the chassis 900 and subsequently assembled display.

Figure 26 is a view similar to Figure 15, like reference numerals indicating like or corresponding parts, illustrating stages of manufacture, during which chassis 900 is populated with components and/or sub-assemblies as it is wheeled along a production line on the wheeled skids. 927 indicates a control assembly - for example including a PC or equivalent (909), monitoring and control board (910) and solid-state memory device (911). Also shown is a battery assembly 928. Figures 27 and 28 are perspective views from Figure 26, to a larger scale.

The detail view of Figure 29 shows a curved slot 932 formed in the surround of glass door 913. The slot 932 is open at its left side and closed at its right side, as seen. The slot 932 receives a stud (not shown) on support bracket (917) of LCD panel 915 such that the LCD panel 915 may be freely suspended from the door 913. To fit to the LCD panel 915, the stud is firstly introduced into the left side of the slot 932 as seen, raised slightly and then dropped down the right side of the slot 932 as seen, where the weight of the LCD panel 915 retains the stud in the slot 932. In order to remove the LCD panel 915, it is lifted sufficiently for the stud to travel up the slot 932 and then dropped back down the left side of the slot 932, where it can exit the slot 932. A slot 932 is provided at each side of the door 913, with respective studs provided on the support bracket of the LCD panel 915 or other associated part. The studs allow the LCD panel 915 to pivot with respect to the door 913, so that the LCD panel may hang freely (as in Figures 10B and 10C, for example) or pivot upwardly with the door 913 (as in Figures 10D and 10E, for example).

Figure 30 shows the glass door hinge 931 in a closed position (at the left side as seen) and in successive stages of opening. In the interests of clarity, the door itself is not shown.

The hinge 931 comprises a parallel linkage in which the outer end of a main support arm 935, which is connected to the door surround or an associated part, is arranged to pivot upwardly as the hinge opens and come forward as it does so. A secondary support arm 936 is pivotally connected at one end to the main support arm 935 and its other end is constrained to move vertically in a slideway 938. Three pivotal links 937 each have one end constrained to move vertically in the slideway 938, one of the pivotal links 937 having its opposite end pivotally connected to the main support arm 935 and the other two pivotal links 937 having their opposite ends pivotally connected to the secondary support arm 936. The inner end of the main support arm 935 moved downwardly a little, as the outer end of the main support arm 935 pivots upwardly and moves outwardly.

Figure 31 shows further detail of the opening glass door 913 with LCD panel 915 hanging from it. The LCD support bracket 917 at each side of the LCD panel 915 is formed with a pair of keyhole slots 1700 with which the heads 1701 of handles 1704 or 1705 are removably engaged, the handles having respective shanks 1702, 1703 of alternative configurations. When secured in the keyhole slots 1700, four handles 1704, 1705 (two each side of the panel 915) may be used to lift the LCD panel 915 into and out of position without needing to touch or mark the front of the LCD panel 915. Thus, this facilitates engaging the LCD panel 915 with the door 913, hanging the panel 915 in its operative position, removing it from that position, or latching the panel 915 to the door 913 for access within the display chassis.

Figure 32 illustrates a novel arrangement for mounting one of more cooling fan. Instead of being mounted in a permanent position on the main chassis, an upper pair of circulating fans 919 are housed in a fan box 1800 that has a pair of apertures to engage with two pillars 1801 that are mounted on the front door 913 or an associated part. When so engaged, the fan box 1800 is secured in place by a pair of clips 1802 that engage with end portions of the pillars 1801. A third clip 1802 engages with a corresponding fastening on the front door 1803, between the two fans 919. Thus, the fan box 1800 forms a sub- assembly that is readily secured to the front door 913 assembly, in a space above the LCD panel 915. Thus, when the door 913 is opened, the fan box 1800 pivots upwardly with it, thereby affording improved access to components or sub- assemblies within the display chassis - e.g. router 907 - for maintenance or replacement. It will be appreciated that the fan box 1800 itself may readily be removed from the front door 913 assembly, for maintenance or replacement.

Figure 33 is a perspective view looking upwards into the display with the front door 913 open, showing the fan box 1800 above the LCD panel 915.

A door seal 1803 is shown in Figure 32. As described above and illustrated in the preceding figures, the door 913 is subjected to a degree of translational movement, forwardly away from the display chassis, as it is pivoted upwardly to open. Conversely, when the door 913 is pivoted downwardly to close, it is also subjected to a degree of translational movement, backwards towards the chassis, thereby applying a relatively uniform pressure to the door seal 1803 to ensure a good seal to the interior of the display.

Figure 34 shows display 100 carried on a pair of wheeled skids 1007 and provided with a pair of fixing and lifting ears or lugs 926. Figure 35 is a view similar to Figure 13, showing a loaded transport jig 1004 with a display 1005 under transportation, the wheeled skids 1007 affording the transport jig in this case, provided with outriggers 1001, 1002 with casters of adjustable height, which can be engaged with and detached from the wheeled skids 1007.

Figure 36 illustrates a novel device for lifting a display 100 and installing it under an obstacle such as a bus shelter roof 500. We refer to the device as a C-lift frame 1650 as it is generally of C-shape. It comprises a generally upright frame 1651 that supports a telescopic upper arm 1652 and a pair of telescopic lower forks 1655 that are joined by a brace 1656. A counterbalance weight 1654 is mounted at an end of the upper arm 1652. A lifting point 1653 is provided on the upper arm 1652 and may take the form of a lifting eye, U-bolt and/or loop for attachment to lifting equipment - for example a HIAB, small crane or any other suitable means.

In use, the lifting forks 1655 are attached to the lifting ears 926 on the display 100 and lifting equipment lifts the display 100 via the C-lift frame 1650, the weight and position of the counterbalance 1654 being suitably adjusted to ensure that the forks 1655 remain substantially horizontal and the display 100 remains substantially upright. The C-lift frame 1650 can then be manoeuvred via the lifting equipment until the display 100 is in a required position beneath the bus shelter roof 500, which is accommodated in the space between the upper arm 1652 and the lower forks 1655 of the C-lift frame 1650. When in position, the display 100 is lowered gently until it is supported on its skids 1007, which in turn are supported by means appropriate to the particular installation, an example of which follows. The C-lift frame 1650 can then be disconnected from the display 100 and removed out of position by the lifting equipment.

Figure 37 illustrates a display 100 mounted on skids 1007 to which jacks 1008 are removably attached. It may be assumed that the display 100 has just be manoeuvred under a bus shelter roof with the aid of the C-lift frame 1650. In this example, as illustrated in Figure 38, the display 100 is supported on the skids 1007 that in turn are supported by jacks 1008 that in turn are supported on ground surrounding an excavation in which foundation plate 210 with C-brackets 211 attached has been laid. By adjusting the height of the jacks 1008, the display 100 is lowered onto and fixed to the top of the C-brackets 211 using fixing bolts or other means, which are in turn fixed to the foundation plate 210. The dropper 502 is fixed to the fixing ears 926 using fixing bolts. Once fixed, the jacks 1008 raise the height of the display 100, C-Brackets 211 and foundation plate 210, allowing the dropper 502 to be fixed to the bus shelter roof 500, where the entire structure is supported on the jacks 1008. Concrete is poured into the foundations to fill the gaps and secure the foundation plate 210 and C-brackets 211 into the foundations. Once the concrete has set, the skids 1007 and jacks 1008 can be removed and returned to the factory or warehouse for re-use. Where necessary the skids 1007 can be extended to bridge the foundation hole, allowing the jacks to safely support the structure until the concrete has set. This method allows the display, foundations and associated C-brackets and foundations plates to be perfectly aligned with the fixed bus shelter fixing points whilst the concrete sets, eliminating any misalignment between foundations and bus shelter roof.

If it is desired to remove the display 100 for maintenance, replacement or disposal, the bus shelter can be temporarily supported e.g. using an Acrow prop, the dropper 502 removed, the display 100 fixed to and supported by the C-lift frame 1650, the display unfixed from the C-brackets 211 and then lifted from beneath the bus shelter. The skids 1007 can then be refit to the display 100 ready for transportation back to the factory or warehouse using a transport means such as a flatbed truck.

Similarly a replacement display 100 can be lifted and positioned under the bus shelter roof 500 using a C-lift frame 1650 and fixed to both the stable C-brackets 211 and bus shelter rood 500 using the dropper 502 in the knowledge that the foundation fixings are perfectly aligned with bus shelter fixings as a result of previous methods.

The steps outlined above with reference to Figures 37 and 38 are not confined to use for installation of displays 100 under obstructions such as bus shelter roof is 500. If there is no such obstruction, the C-lift frame 1650 does not have to be employed and the display 100 can be positioned over an excavated foundation, utilising lifting ears 926 and/or skids 1007 and/or jacks 1008. The skids 1007 and jacks 1008 may also be used where the foundation is not excavated, for convenient positioning of the display 100 with respect to its various fixings. For example, the display 100 may conveniently be raised to meet a bus shelter roof 500 or other structure above it, to which it may be secured.

Skids 1007 may be of different lengths for different installations. However, they may conveniently be of a standard length suitable for most purposes, with optional extension pieces to extend the distance between the skids 1007 and jacks 1008 and/or outriggers 1001, 1002.

Figure 39 illustrates fixings between a display 100 and a bus shelter roof 500. A 'dropper' 502 is secured to the fixing ears 926 at the top of the display 100 by nuts and bolts or other suitable means and also to the bus shelter roof 500 by nuts and bolts or other suitable means.

Figures 40 and 41 illustrate a 'top box' that may provide a top cladding to a screen 100 of freestanding configuration, without a structure such as a bus shelter roof above it. The top box 1600 has fixing ears 1601 that are located adjacent the fixing ears 926 at the top of the display 100, the ears 926 passing through slots in the base of the top box 1600. The fixing ears 1601 and 96 are secured together by nuts and bolts or other securing means. An antenna extension cable 1602 passes through a sealing grommet at the top of the display 100 and connects to antenna 924 on top of the top box 1600 via a hole in the bottom of the top box 1600. The top box 1600 has front and rear panels that can be opened to gain access to components or fixings inside.

A novel transport system for displays is illustrated in Figures 42 to 48.

Figure 42 shows a transport frame base (module) 1901 that is secured to a flat load bed of a lorry (truck) 1900. The transport frame base 1901 may be used as a single item - for example, on a small flatbed lorry - or cascaded with other similar modules - for example, three modules can be used on an articulated lorry. The transport system can also be used on other transport vehicles, vessels or devices.

The load bed of the truck 1900 is provided with a series of anchor points 1902 - typically along the edges of the load bed. The transport frame base 1901 is secured to the anchor points 1902 by fixings 1903 - for example, turnbuckles, chains, straps, etc. As seen in Figure 43, a display 100 to be transported is mounted on skids 1007, to each of which is fitted a fork bracket 1904 at or adjacent a respective end of the skid 1007. Each of the fork brackets 1904 is formed with an aperture to receive a fork 1905 of a forklift truck. Thus, as illustrated, each of a pair of lifting forks 1905 engages with two fork brackets, one on each of the skids 1007, so that the forklift truck can readily lift and transport the display 100, mounted on the skids 1007.

As seen in Figure 44 and Figure 40 4A, the transport frame base 1901 comprises a plurality of parallel rails 1906 that are secured to the frame base 1901 in pairs. The rails 1906 are of open channel or U-section, as seen. In Figure 44, the rails 1906 are arranged in two spaced sets of three, one set on the left side and the other set on the right side of the frame base 1901, as seen. The figure shows a single display 100 mounted on its skids 1007, which are secured respectively to the right most rail 1906 of each set of three, as seen. To this end, each rail 1906 is formed with pairs of opposite holes at modular intervals, to receive fixing pins 1911 (e.g. clevis pins) that secure the bottom part of a skid bracket 1909. The upper part of the skid bracket 1909 is secured to an end of a respective skid 1007, by means of another fixing pin 1911 that passes through a pair of opposite holes at the respective end of the skid 1007, as shown in Figure 44A.

An upright frame 1907 is secured at one end of the frame base 1901 and held by cross braces 1910. Further braces 1908 are secured between the top of the upright frame 1907 and the fixing ears 926 at the top of the display 100. Thus, the display 100, as shown in Figure 44, is secured firmly on the transport frame base 1901 and by the upright frame 1907, the transport frame base 1901 being secured firmly in turn on the load bed of the respective transport vehicle or device.

With a single display 100 secured to the frame base 1901, as shown in Figure 44, the remaining pairs of rails 1906 may then be used to mount and secure additional displays. Thus, the skids 1007 of a second display 100 may be mounted on the centre rails 1906 of each set of 3, such that the second display is disposed slightly behind and to the left (as seen) of the first display 100. This effectively nests the skids 1007 under the displays 100, to minimise the footprint required to load multiple displays 100 and maximise packing density on the transport. A further display 100 may then be mounted in a similar way behind the second display, slightly behind and to the left of it, with the respective skids 1007 being mounted on the leftmost rails 1906 (as seen) of the sets of three. A fourth display 100 may then be mounted behind the third display, again using the right most rails 1906 (as seen) of each set of three, so that the fourth display is lined up behind the first display - and so on.

Figure 45 illustrates such an arrangement, with 4 displays 100 mounted on the transport frame base 1901, one behind the other, with each two successive displays laterally offset. Braces 1908 secure the tops of the displays 100 to the top of the upright frame 1907. Where two displays 100 are in alignment, as with the first and fourth displays, successive braces 1908 may be joined at fixing ears 926, as shown in Figure 45, where a fixing pin 1911 secures the respective ends of two successive braces 1908 at a fixing ear 926 of the first display 100.

In Figure 46, an additional upright frame 1907 is secured part way along the frame base 1901, with braces 1910 to secure the upright frame 1907 and with upper braces 1908 secured to the top of the upright frame 1907. By securing the skids 1007 to the rails 1906 on the frame base 1901 and by securing the tops of the displays 100 by the braces 1908, the displays 100 are formed into a secure block that cannot fall via a "domino effect" during transportation. The load of displays 100 can move only as a whole rather than as individual elements.

As mentioned above, the frame base 1901 is preferably of modular design such that it can be cascaded with other similar units. To this end, as shown in Figure 47, male connectors 1912 and female connectors 1913 are provided at the ends of the frame base 1901 and are adapted to interconnect in order to secure adjacent frame bases 1901 together.

Figure 48 shows an arrangement in which 3 transport frame bases 1901 have been interconnected and to end and secured to the load bed of an articulated lorry 1900. Displays 100 are secured to the frame bases 1901 and upright frames 1907 as described above, to form an integrated load for transport. At the end of the load bed, space is provided for a pallet to transport supplementary fixings - e.g. C-brackets, plinths, cladding, etc.

At a transport destination, one or more displays 100 may be detached from the frame base 1901 and upright frame(s) 1907 and lifted down from the load bed for installation at the respective site. At a suitable point, the fork brackets 1904 may be removed from the skids 1007 and, if they have previously been removed or retracted, wheels, rollers, casters, etc may be redeployed on the skids 1007 - and/or wheeled outriggers may be attached to the skids 1007, to assist as may be required in the respective installation process.

Illustrated examples of the invention may provide numerous features and advantages, as follows.

Improved access is provided to electronics components and assemblies behind an LCD panel to facilitate easy swap out; without having to provide mechanisms to rotate the screen away from obstacles (e.g. wall) and gain entry from rear panels that require removal of rear advertising assemblies e.g. lighting strips.

Simpler installation is afforded by reducing the weight of assemblies that obviate the need for expensive lifting equipment; particularly through single site visits eliminating installation of different units at different times.

Flexibility of design is afforded, with mechanisms to quickly tailor mass produced assemblies into customer and application specific screens quickly, with the ability to mount freestanding, wall mounted or as part of existing structures without creating fully bespoke designs.

A scalable electronic display apparatus combined with a scalable mass process (from supply of components & assemblies, through manufacture, storage, transport logistics, installation, maintenance and ongoing operations) is key for reducing the total cost of ownership for both the advertising screen operator and the screen supplier (who may wrap up the maintenance service into a rental model).

Conventionally, large outdoor screens (large-scale electronic displays) e.g. 60 inch (152 cm) or more are extremely large, bulky and heavy and as a minimum they exceed 100kg in weight and typically greater than 250Kg. This is as a result of the structure, weather-proofing, temperature extremes for the environment, and also to ensure audience viewability from long distances in direct sunlight.

Examples of the invention may provide a large outdoor advertising screen module that can be quickly and easily tailored to meet varying client and market needs that change on an ongoing basis, by enabling the module to be mounted, clad and integrated in different ways through attached modular accessories; in a way that can be mass produced for low cost and high volume. Furthermore they adopt features that ease serviceability and maintenance such that the cost of ownership is reduced over the lifetime of the product. The modular end products created (through integration of accessories) are mass produced through a method that spans the life cycle of the module / end products including component supply, manufacture, warehouse, transportation, on-site installation, maintenance and de-installation.

Illustrated in the example of Figure 14 is a method or process of manufacturing a large-scale electronic display having a given orientation, comprising the steps of constructing a chassis to provide structural strength for the display; mounting the chassis on a transport jig; conveying the chassis on the transport jig to an assembly line; moving the chassis on the transport jig along the assembly line; and fitting components for the display to the chassis as it is moved along the assembly line: wherein the chassis is maintained in an orientation corresponding to the given orientation of the display from the time that is mounted on the transport jig until the time that assembly of the display is completed on the assembly line.

In such a process, the desired electronic display end goods are manufactured by successively assembling components, sub-assemblies and modules down a production line; where the process can be extended to simplify the complete product life cycle from supply of key components through to installation and ongoing maintenance.

Prior to the production line, key large source assemblies may be prepared and transported with sub-systems and components in a suitable way and using jigs/bogies that minimise handling and dovetail with manufacturing process to simplify and reduce costs.

Post production line, the product is transported and handled using the re-useable jigs / bogies with suitable "accessories / attachments" that simplify the on-site installation.

The unit is transported along the production line upright, as it remains throughout storage, shipment and final installation.

Typically, the display in manufacture is successively wheeled on the bogie down the production line for assembly, then test, then to a transportation area; where wheels maybe optionally removed from the bogie and the entire screen assembly (including stable base) lifted onto vehicle for transport to a warehouse. Once taken from warehouse to site, the screen assembly will be lifted, placed on the ground and wheeled jigs attached to the base plates to aid moving the screen assembly into positioned on the plinth, where there is sufficient movement in the jig to traverse and manoeuvre around obstacles such as kerbs, pavements, slopes, bollards, bins ... or under canopies providing restricted head height e.g. forecourt or shop canopies.

The transport jigs, where stacked, may provide additional stability for transporting more than one unit. The transport jigs may allow one or two displays to be built upon the jigs by moving the jig between two parallel manufacturing lines.

Handling can be simplified at each stage since there is no need to change the orientation of the display throughout the whole process, e.g. by simply moving the screen on its "bogie" or jig with supplementary aid from relatively simple, traditional lifting equipment such as a crane (within manufacturing plant) or HIAB (at the point of installation); eliminating the multiple site visits of heavy assemblies as associated with previously proposed approaches.

These handling features facilitate moving for example, a heavy 250-350kg product that might otherwise cause Health & Safety issues, Quality Assurance issues and increased time.

Two parallel manufacturing lines allow two screen assemblies to be bolted to a common plate/bogie/transport jig and assembled together as they pass between the two process lines - resulting in the two screens being fixed together at bottom and top, to add improved stability for subsequent transport.

Once the display has be located on site then the installer will plug in power from the plinth, noting that the plug in approach avoids the need for an electrician to be on site. Once transport bolts/fixings have been removed from the display assembly, then side air filters will be placed in position and closed off with side cladding. Note that this aids the general maintenance of the screen when non-skilled people can remove the side cladding (without opening up the main screen) to clean or swap filters. Furthermore, since these are at the side, as opposed to the top as with many large screens, this means that no working at heights tools e.g. steps, platforms are required that have a significant impact on health and safety, particularly where screens are located at hazardous environments such as roadside, rail platforms, petrol forecourts etc.

Air flow is arranged horizontally across the unit such that air intake filters can be easily cleaned or replaced by non-skilled workers without opening the main unit or having to work at heights in busy locations (as is the case for previously proposed vertical cooling arrangements where air intake is located at the top of the unit).

Serviceability of the display may be facilitated through a front glass door that comprises glass bonded directly to a frame (not replaceable glass) such that the entire glass door can be replaced, rather than just the glass.

Prior art has glass door assemblies (replaceable glass) opening hinged from the top using a fixed hinge; or by bolting the glass door assembly evenly around the seals e.g. as with a 'LCD Cartridge' approach.

Using fixed hinges generally does not apply equal pressure to the seals all around the frame as the door closes, resulting in distortion to the seals.

Bolted glass assemblies require many bolts to be opened making it time consuming; furthermore, once re-attached care has to be taken to apply even pressure to ensure the seals are not damaged

The illustrated example of opening mechanism utilises a cantilever hinge, which brings the glass door assembly forward and away from the frame as it opens, due to the parallelogram action of the hinge.

Key benefits are that it is easy to open without needing many bolts to be undone (reducing time on site); and when the door closes it provides even pressure around the door frame seals as the door contacts and closes against the frame; without distortion to the seal around the hinges.

As regards the glass door for the display, prior art shows glass assemblies being using for advertising screens; where the glass is separate and replaceable to the door frame; for use where the glass breaks and can be replaced easily. It also shows glass bolted with many bolts in order to provide a secure seal which is difficult and time consuming to open.

Glass can be bonded directly to the frame such that it is not replaceable, where the frequency / probability of it getting damaged makes it worthwhile bonding as one unit such that the glass door can be opened easily. However, where the glass is broken then the cost of replacing the glass door is expensive.

We propose the use of a new material that has been developed and applied to commercial window applications. Hammerglass, a polycarbonate material with a silicon oxide (glass) surface (developed by www.hammerglass.com) is a durable abrasion-resistant polycarbonate sheet, 300 times stronger than glass and virtually unbreakable. It is 40% lighter than glass, making it easier to handle.

Although it doesn't break when subjected to ballistics, hammers and other attacks, it does however have weaknesses for outdoor advertising applications. It can be scratched with sharp objects; it is very reflective making it not directly suited to use in strong light e.g. sunlight conditions, where the advertising on screen needs to be clearly visible; from a solar gain control perspective (i.e. sunlight heating up the screen), although the manufacturers have Infrared (IR) versions, these may not be optimal optically. Other similar unbreakable glass solutions exist e.g. Exatec who are starting to apply similar technology to car glazing with the weight savings that this brings.

We propose a "layered" solution that combines the benefit of a glass door where the glass is bonded directly to the door frame; e.g. where it can then be attached to the outdoor advertising screen using hinges such as fixed or cantilever hinges. We also provide a toughened plastics material in addition to or in place of glass, so that it is rarely needed to be replaced - e.g. polycarbonate. Preferably an anti-graffiti window film is applied to the toughened plastics sheet to tailor the optical and / or solar gain properties of the overall sheet. The extra film provide extra protection for scratching and is easily removable and replaceable. Thus, in case of any damage, the film is simply replaced rather than the glass.

The frame to which the glass (or alternative) is bonded to does not need to be metal. For example, it could be Glass Re-enforced Plastic (GRP), fibreglass etc in order to reduce the weight of overall weight of the door.

The layers of toughened plastics sheet and attached film could be arranged to be replaced and fixed into a glass assembly as per prior art, or could be bolted to a frame through holes in the toughened plastics sheet where seals are made as the bolts are tightened.

When combined with the other features as disclosed herein, this provides a cost effective, light weight, easy to work with solution that helps reduce cost an aid mass scalability of large outdoor advertising screens.

The figures illustrate two displays back-to-back to provide a digital advertising screen on both front and rear. Appropriate cladding will give the appearance that this is just one unit.

This is far more efficient than developing a common housing that takes both LCD screens and requires suitable cooling arrangements; or place two single units together which may result in the unit being very thick.

Heat exchangers can be placed to force air flow to go either left-to-right or right-to-left within each module. This enables two front display modules to be positioned back-to-back as a single combined module, and arranged such that the external air intake on both modules is on the same (common) side; as well as the exhaust outlets also being on the same but opposite side. This ensures that the dirty air output from one display does not contaminate the clean air input of the displays. It also enables external filters placed between the cladding and the display modules to be easily accessible for regular cleaning and replacement as part of an ongoing maintenance process, noting that the operative a) does not have to work at heights since the filters will be on the side rather than the top of the unit and b) does not have to open the display where the sensitive electronics are present - e.g. side cladding can be removed by a low skill operative when the glass is cleaned.

In the foregoing, the LCD panel and the box formed by the chassis are typically rectangular, but could be other shapes.

Although LCD panels are mentioned primarily, the invention applies equally to display panels utilising other technology, e.g. LED or plasma.

In this specification, the verb "comprise" has its normal dictionary meaning, to denote non-exclusive inclusion. That is, use of the word "comprise" (or any of its derivatives) to include one feature or more, does not exclude the possibility of also including further features. The word "preferable" (or any of its derivatives) indicates one feature or more that is preferred but not essential.

All or any of the features disclosed in this specification (including any accompanying claims and drawings), and/or all or any of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method of manufacturing a large-scale electronic display having a given orientation, comprising the steps of:
a. constructing a chassis to provide structural strength for the display;
b. mounting the chassis on a wheeled transport jig;
c. conveying the chassis on the transport jig to an assembly line;
d. wheeling the chassis on the transport jig along the assembly line; and
e. fitting components for the display to the chassis as it is wheeled on said transport jig along the assembly line:
f. wherein the chassis is maintained in an orientation corresponding to the given orientation of the display from the time that is mounted on the transport jig until the time that assembly of the display is completed on the assembly line.

2. A method according to claim 1, comprising the further step of transporting the completed display from the end of the assembly line to its installation location on the transport jig, whilst maintaining the orientation of the display.

3. A method according to claim 1 or 2, wherein wheels of the transport jig are removable.

4. A method according to claim 1, 2 or 3, wherein the transport jig comprises at least one wheel that is of adjustable height.

5. A method according to any of claims 1 to 4, wherein the transport jig comprises at least two spaced, wheeled skids that are secured to the chassis at respective sides thereof.

6. A method according to any of the preceding claims, wherein the transport jig has a configuration that allows nesting of jigs, one behind the other.

7. A method according to any of the preceding claims, wherein the transport jig is provided with wheeled outriggers that may be removably attached to the jig, to extend the reach of the jig.

8. A method according to any of the preceding claims, wherein the transport jig is provided with jacks that may be removably attached to the jig, to adjust the height of the jig above a support surface of the jacks.

9. A method according to any of the preceding claims, wherein the transport jig is provided with detachable fork brackets to receive the forks of a fork lift device in order to lift a display on the transport jig.

10. A method according to any of the preceding claims, wherein the chassis is provided at its upper part with lifting and/or fixing points by which the chassis may be lifted and/or to which components may be fixed.

11. A method according to any of the preceding claims, further comprising the step of lifting the assembled display into a desired site location below a structure, by means of a lifting device that has at least one upper arm by which the lifting device is lifted and at least one lower arm that is connected to the chassis of the assembled display, with a space between the upper and lower arms into which said structure projects.

12. A method according to claim 11, wherein said lifting device is generally C-shaped in side elevation, with a counterbalance weight mounted on said upper arm, and said at least one lower arm comprises a pair of parallel forks.

13. A method according to any of the preceding claims, comprising the further step of transporting the assembled display on a transport system comprising a plurality of parallel rails mounted on a frame base that is carried on a transport vehicle, vessel or device, the transport jig engaging the rails to support the display and the transport system being adapted to carry a plurality of assembled displays, one behind the other.

14. A method according to any of the preceding claims, wherein the or each display has a housing, a transparent door at the front of the housing and a display panel behind the door, wherein the door is connected to the housing by a hinge mechanism that applies closing pressure around the door when closed and brings the door forward, away from the housing, as it opens by pivoting about the hinge mechanism, and the display panel is connected to the door, the hinge mechanism or a part connected to the door or hinge mechanism, so that it is also brought forward with the door as it opens.

15. A method according to any of the preceding claims, wherein said components fitted to the chassis as it is wheeled along the assembly line comprises replaceable modular sub-assemblies that are accessible from the front of the chassis, said sub-assemblies comprising one or more of display control sub-assembly; environmental control sub-assembly; battery sub-assembly; router sub-assembly; fan sub-assembly; power sub-assembly; fan box sub-assembly; camera sub-assembly; display panel sub-assembly; video sub-assembly.

16. A method according to any of the preceding claims, wherein a front door of the display comprises a sheet of polycarbonate material with a silicon oxide outer coating, the sheet being bonded to an outer frame.

## Patentansprüche

1. Verfahren zur Herstellung einer großflächigen elektronischen Anzeige mit einer gegebenen Ausrichtung, umfassend die folgenden Schritte:
a. Konstruieren eines Gestells zum Bereitstellen struktureller Stabilität für die Anzeige;
b. Montieren des Gestells auf einer mit Rädern versehenen Transportvorrichtung;
c. Zuführen des Gestells auf der Transportvorrichtung zu einer Montagelinie;
d. Rollen des Gestells auf der Transportvorrichtung entlang der Montagelinie; und
e. Anbringen von Komponenten für die Anzeige am Gestell, während es auf der Transportvorrichtung entlang der Montagelinie gerollt wird:
f. wobei das Gestell von dem Zeitpunkt, zu dem es auf der Transportvorrichtung montiert wird, bis zu dem Zeitpunkt, zu dem die Montage der Anzeige auf der Montagelinie fertiggestellt ist, in einer Ausrichtung entsprechend der gegebenen Ausrichtung der Anzeige gehalten wird.

2. Verfahren nach Anspruch 1, umfassend den weiteren Schritt des Transportierens der fertiggestellten Anzeige vom Ende der Montagelinie zu ihrem Installationsort auf der Transportvorrichtung, während die Ausrichtung der Anzeige gehalten wird.

3. Verfahren nach Anspruch 1 oder 2, wobei die Räder der Transportvorrichtung abnehmbar sind.

4. Verfahren nach Anspruch 1, 2 oder 3, wobei die Transportvorrichtung mindestens ein Rad umfasst, das eine einstellbare Höhe hat.

5. Verfahren nach einem der Ansprüche 1 bis 4, wobei die Transportvorrichtung mindestens zwei beabstandete, mit Rädern versehene Kufen umfasst, die an das Gestell an jeweiligen Seiten davon befestigt sind.

6. Verfahren nach einem der vorstehenden Ansprüche, wobei die Transportvorrichtung eine Konfiguration aufweist, die das Verschachteln von Vorrichtungen, eine hinter der anderen, ermöglicht.

7. Verfahren nach einem der vorstehenden Ansprüche, wobei die Transportvorrichtung mit mit Rädern versehenen Auslegern versehen ist, die abnehmbar an der Vorrichtung angebracht werden können, um die Reichweite der Vorrichtung zu erweitern.

8. Verfahren nach einem der vorstehenden Ansprüche, wobei die Transportvorrichtung mit Hebevorrichtungen versehen ist, die abnehmbar an der Vorrichtung angebracht werden können, um die Höhe der Vorrichtung über einer Stützfläche der Hebevorrichtungen anzupassen.

9. Verfahren nach einem der vorstehenden Ansprüche, wobei die Transportvorrichtung mit entfernbaren Gabelklemmen versehen ist, um die Gabeln einer Gabelhebeanordnung aufzunehmen, um eine Anzeige auf die Transportvorrichtung zu heben.

10. Verfahren nach einem der vorstehenden Ansprüche, wobei das Gestell an seinem oberen Teil mit Hebe- und/oder Befestigungspunkten versehen ist, durch die das Gestell gehoben und/oder an denen Komponenten befestigt werden können.

11. Verfahren nach einem der vorstehenden Ansprüche, ferner umfassend den Schritt des Hebens der montierten Anzeige in einen gewünschten Standort unterhalb einer Struktur mittels einer Hebeanordnung, die mindestens einen oberen Arm aufweist, mit dem die Hebeanordnung gehoben wird, und mindestens einen unteren Arm, der mit dem Gestell der montierten Anzeige verbunden ist, wobei zwischen dem oberen und unteren Arm ein Raum besteht, in den die Struktur vorsteht.

12. Verfahren nach Anspruch 11, wobei die Hebeanrodnung in Seitenansicht allgemein C-förmig ist, wobei am oberen Arm ein Gegengewicht montiert ist, und wobei der mindestens eine untere Arm ein Paar paralleler Gabeln umfasst.

13. Verfahren nach einem der vorstehenden Ansprüche, umfassend den weiteren Schritt des Transportierens der montierten Anzeige auf einem Transportsystem, umfassend eine Vielzahl paralleler Schienen, die auf einer Rahmenbasis montiert sind, die auf einem Transportfahrzeug, einem Transportbehälter oder einer Transportanordnung getragen wird, wobei die Transportvorrichtung die Schienen in Eingriff nimmt, um die Anzeige zu unterstützen, und das Transportsystem angepasst ist, um eine Vielzahl montierter Anzeigen, eine hinter der anderen, zu tragen.

14. Verfahren nach einem der vorstehenden Ansprüche, wobei die oder jede Anzeige ein Gehäuse, eine transparente Tür an der Vorderseite des Gehäuses und ein Anzeigefeld hinter der Tür aufweist, wobei die Tür durch einen Scharniermechanismus mit dem Gehäuse verbunden ist, der, wenn er geschlossen ist, einen Schließdruck rund um die Tür anlegt, und die Tür, wenn sie durch Schwenken um den Scharniermechanismus geöffnet wird, nach vorne, vom Gehäuse weg bringt, und das Anzeigefeld mit der Tür, dem Scharniermechanismus oder einem mit der Tür oder dem Scharniermechanismus verbundenen Teil verbunden ist, so dass es beim Öffnen ebenfalls mit der Tür nach vorne gebracht wird.

15. Verfahren nach einem der vorstehenden Ansprüche, wobei die Komponenten, die am Gestell angebracht werden, während das Gestell entlang der Montagelinie gerollt wird, ersetzbare modulare Unterbaugruppen umfassen, die von der Vorderseite des Gestells aus zugänglich sind, wobei die Unterbaugruppen eine oder mehrere Anzeigesteuerunterbaugruppe(n); Umweltsteuerunterbaugruppe(n); Batterieunterbaugruppe(n); Routerunterbaugruppe(n); Lüfterunterbaugruppe(n); Energieunterbaugruppe(n); Lüfterkastenunterbaugruppe(n); Kameraunterbaugruppe(n); Anzeigefeldunterbaugruppe(n); Videounterbaugruppe(n) umfassen.

16. Verfahren nach einem der vorstehenden Ansprüche, wobei eine Vordertür der Anzeige eine Platte aus Poylcarbonatmaterial mit einer Außenbeschichtung aus Siliziumoxid umfasst, wobei die Platte an einen äußeren Rahmen geklebt ist.

## Revendications

1. Procédé de fabrication d'un dispositif d'affichage électronique à grande échelle possédant une orientation donnée, comprenant les étapes de :
a. construction d'un châssis pour offrir une résistance structurelle au dispositif d'affichage ;
b. montage du châssis sur un gabarit de transport à roues ;
c. transport du châssis sur le gabarit de transport jusqu'à une chaîne de montage ;
d. déplacement grâce aux roues du châssis sur le gabarit de transport le long de la chaîne de montage ; et
e. adaptation des composants pour le dispositif d'affichage au châssis tandis qu'il est déplacé grâce aux roues sur ledit gabarit de transport le long de la chaîne de montage :
f. ledit châssis étant maintenu selon une orientation correspondant à l'orientation donnée du dispositif d'affichage à partir du moment où il est monté sur le gabarit de transport jusqu'au moment où le montage du dispositif d'affichage est terminé sur la chaîne de montage.

2. Procédé selon la revendication 1, comprenant l'étape supplémentaire de transport du dispositif d'affichage terminé de l'extrémité de la chaîne d'assemblage jusqu'à son emplacement d'installation sur le gabarit de transport, tout en conservant l'orientation du dispositif d'affichage.

3. Procédé selon la revendication 1 ou 2, lesdites roues du gabarit de transport étant amovibles.

4. Procédé selon la revendication 1, 2 ou 3, ledit gabarit de transport comprenant au moins une roue qui est réglable en hauteur.

5. Procédé selon l'une quelconque des revendications 1 à 4, ledit gabarit de transport comprenant au moins deux patins à roues espacés qui sont fixés au châssis sur des côtés respectifs de celui-ci.

6. Procédé selon l'une quelconque des revendications précédentes, ledit gabarit de transport possédant une configuration qui permet l'imbrication de gabarits les uns derrière les autres.

7. Procédé selon l'une quelconque des revendications précédents, ledit gabarit de transport étant doté de stabilisateurs à roues qui peuvent être fixés de manière amovible au gabarit, afin d'allonger la portée du gabarit.

8. Procédé selon l'une quelconque des revendications précédentes, ledit gabarit de transport étant doté de vérins qui peuvent être fixés de manière amovibles au gabarit pour régler la hauteur du gabarit au dessus d'une surface d'appui des vérins.

9. Procédé selon l'une quelconque des revendications précédentes, ledit gabarit de transport étant doté de supports de fourche détachables pour recevoir les fourches d'un chariot élévateur afin de soulever un dispositif d'affichage sur le gabarit de transport.

10. Procédé selon l'une quelconque des revendications précédentes, ledit châssis étant doté au niveau de sa partie supérieure de points de levage et/ou de fixation par lesquels le châssis peut être soulevé et/ou auxquels des composants peuvent être fixés.

11. Procédé selon l'une quelconque des revendications précédentes, comprenant en outre l'étape de levage du dispositif d'affichage monté dans un emplacement de site souhaité en dessous une structure, au moyen d'un dispositif de levage qui possède au moins un bras supérieur par lequel le dispositif de levage est levé et au moins un bras inférieur qui est raccordé au châssis du dispositif d'affichage monté, avec un espace entre les bras supérieur et inférieur dans lequel la structure se projette.

12. Procédé selon la revendication 11, ledit dispositif de levage étant généralement en forme de C en élévation latérale, avec un poids de contrepoids monté sur ledit bras supérieur et ledit au moins un bras inférieur comprenant une paire de fourches parallèles.

13. Procédé selon l'une quelconque des revendications précédentes, comprenant l'étape supplémentaire de transport du dispositif d'affichage monté sur un système de transport comprenant une pluralité de rails parallèles montés sur une base de cadre qui est porté sur un véhicule, un navire ou un dispositif de transport, ledit gabarit de transport venant en prise avec les rails pour supporter le dispositif d'affichage et ledit système de transport étant conçu pour porter une pluralité de dispositifs d'affichage montés les uns derrière les autres.

14. Procédé selon l'une quelconque des revendications précédentes, ledit ou chaque dispositif d'affichage possédant un boîtier, une porte transparente à l'avant du boîtier et un panneau d'affichage derrière la porte, ladite porte étant raccordée au boîtier par un mécanisme de charnière qui applique une pression de fermeture autour de la porte lorsque elle est fermée et apporte la porte vers l'avant, à distance du boîtier, tandis qu'elle s'ouvre en pivotant autour du mécanisme de charnière et le panneau d'affichage étant raccordé à la porte, au mécanisme de charnière ou à une partie raccordée au mécanisme de porte ou de charnière afin qu'il soit également amené vers l'avant avec la porte tandis qu'elle s'ouvre.

15. Procédé selon l'une quelconque des revendications précédentes, lesdits composants adaptés au châssis tandis qu'il est déplacé grâce aux roues le long de la chaîne de montage comprenant des sous-ensembles modulaires remplaçables qui sont accessibles depuis l'avant du châssis, lesdits sous-ensembles comprenant un ou plusieurs d'un sous-ensemble de commande d'affichage ; d'un sous-ensemble de régulation de conditions ambiantes ; d'un sous-ensemble de batterie ; d'un sous-ensemble de routeur ; d'un sous-ensemble de ventilateur ; d'un sous-ensemble d'alimentation ; d'un sous-ensemble de boîtier de ventilateur ; d'un sous-ensemble de caméra ; d'un sous-ensemble de panneau d'affichage ; d'un sous-ensemble vidéo.

16. Procédé selon l'une quelconque des revendications précédentes, une porte d'entrée du dispositif d'affichage comprenant une feuille de matériau polycarbonate avec un revêtement externe d'oxyde de silicium, ladite feuille étant liée au cadre externe.
